(19) **Europäisches Patentamt**

**European Patent Office**

**Office européen des brevets**

(11) **EP 1 034 511 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(51) Int Cl.⁷: **G06T 3/40**

(21) Anmeldenummer: **98963526.3**

(22) Anmeldetag: **27.11.1998**

(86) Internationale Anmeldenummer:
**PCT/EP98/07689**

(87) Internationale Veröffentlichungsnummer:
**WO 99/028864 (10.06.1999 Gazette 1999/23)**

(54) **VERFAHREN ZUR UMSETZUNG DIGITALER DATEN IM RASTER EINER ERSTEN AUFLÖSUNG IN DIGITALE ZIELDATEN EINER ZWEITEN AUFLÖSUNG**

METHOD FOR CONVERTING DIGITAL RASTER DATA OF A FIRST RESOLUTION INTO DIGITAL TARGET DATA OF A SECOND RESOLUTION

PROCEDE DE CONVERSION DE DONNEES NUMERIQUES COMPRISES DANS UNE TRAME D'UNE PREMIERE DEFINITION EN DONNEES CIBLES NUMERIQUES D'UNE SECONDE DEFINITION

(84) Benannte Vertragsstaaten:
**BE DE FR GB**

(30) Priorität: **28.11.1997 DE 19752927**

(43) Veröffentlichungstag der Anmeldung:
**13.09.2000 Patentblatt 2000/37**

(73) Patentinhaber: **Océ Printing Systems GmbH 85586 Poing (DE)**

(72) Erfinder: **HIRN, Andreas D-85652 Pliening (DE)**

(74) Vertreter: **Schaumburg, Thoenes, Thurn Patentanwälte Postfach 86 07 48 81634 München (DE)**

(56) Entgegenhaltungen:
**WO-A-96/16380          DE-A- 4 027 897**
**US-A- 5 646 741**

• **"FAST SCALING METHOD TO REDUCE BINARY IMAGES BZ SPECIFIC FACTORS" IBM TECHNICAL DISCLOSURE BULLETIN, Bd. 37, Nr. 12, 1. Dezember 1994, Seiten 357-359, XP000487816**

EP 1 034 511 B1

**Beschreibung**

Die Erfindung betrifft ein Verfahren zur Umsetzung digitaler Quelldaten im Raster einer ersten Auflösung in digitale Zieldaten einer zweiten Auflösung nach dem Oberbegriff des Patentanspruchs 1.

Bei der digitalen Datenverarbeitung ist es häufig erforderlich, digitale Bilddaten, die im Raster einer ersten Auflösung vorliegen, in Zieldaten einer zweiten Auflösung umzusetzen. Jeder Bildpunkt, d.h., ein dem digitalen Wert zugeordneter Punkt im Raster wird dabei als Pixel bezeichnet. Ohne Graustufen entspricht ein Pixel also einem Bit. Die Ortsauflösung wird dabei in Bildpunkten pro Inch (dots per inch, dpi) angegeben. Ein Inch entspricht bekanntlich 25,6 mm. Die zweite Auflösung (Zielauflösung) ist in der Regel höher als die erste (Quellauflösung). Das Zielbild in der zweiten Auflösung kann statt oder zusätzlich zu der höheren Ortsauflösung auch mehr Graustufen pro Pixel enthalten als das Quellbild.

Beispielsweise kommt es in der digitalen Drucktechnik häufig vor, daß Bilddaten von einem Computer in einem ersten Raster, beispielsweise in einem 240 dpi (dots per inch)-Raster geliefert werden, aber von einem Drucker in einem anderen Raster, beispielsweise in einem 600 dpi-Raster, wiedergegeben werden sollen. Insbesondere beim Erweitern einer bestehenden EDV-Anlage um einen modernen Drucker kommt es vor, daß früher erstellte Druckaufträge beispielsweise nur Vorlagen in 240 dpi-Auflösung aufweisen. Will der Anwender die Vorzüge seines neuen Druckers mit beispielsweise 600 dpi Auflösung nutzen, so müssen die Druckdaten entsprechend umgesetzt werden. Die Umsetzung soll dabei automatisch erfolgen ohne vom Anwender Eingaben abzuverlangen.

Da sich halbe Pixel in Wiedergabe-Einheiten mit diskreten Darstellungsstufen wie LCD-Bildschirmen oder digitalen Drukkern nicht darstellen lassen, müssen zur Umsetzungen um nicht ganzzahlige Faktoren der Auflösung spezielle Regeln aufgestellt werden.

Die Umsetzung kann nun derart erfolgen, daß jeder Wert des ersten Rasters um einen Skalierungsfaktor SF, der durch das Verhältnis der beiden Auflösungswerte der Raster vorgegeben ist, vervielfacht wird, daß also beispielsweise aus einem Wert im ersten Raster die SF-fache Menge gleicher Werte im zweiten Raster erzeugt wird, wobei gilt:

$$SF_i = \frac{Aufl\ddot{o}sung\ des\ 2.\ Rasters\ in\ Richtung\ i}{Aufl\ddot{o}sung\ des\ 1.\ Rasters\ in\ Richtung\ i} \qquad \text{(Gleichung 1)}.$$

Durch einen derartigen Skaliervorgang werden die Daten zwar in das Zielraster transformiert, jedoch wird die Wiedergabequalität hierdurch nicht verbessert.

Andererseits ermöglicht die Umsetzung von Daten in ein Raster mit höherer Auflösung gerade die Verbesserung der Wiedergabequalität indem beispielsweise Konturen feiner gezeichnet werden. Für eine derartige Umsetzung ist es in der Regel erforderlich, die Daten zu glätten. Bei bekannten Glättverfahren gehen Glättparameter in der Regel in Form einer Matrix bzw. eines Fenster in den Glättvorgang ein, wobei die Gewichtung benachbarter Bildpunkte eines zu glättenden Punktes durch die Werte der Matrix vorgegeben sind. Solche Fenster sind bei $SF_x$ = SFy 3 x 3-Fenster oder 5 x 5-Fenster.

Ein Verfahren zum Skalieren und Glätten von Bilddaten ist aus der DE 195 06 792 A1 bekannt. Bei diesem Verfahren sind mehrere Sätze von Pixelmustern bzw. ihnen zugeordnete boolsche Rechenoperationen vorgesehen, anhand derer die Umsetzung erfolgt. Zur Umsetzung wird eine Matrix von Quell-Bilddaten mit beispielsweise 7 x 7 Bildpunkten den Basis-Rechenoperationen unterworfen und daraus die Ziel-Bilddaten gewonnen. Bei einem "Hochskalieren" der Bilddaten (SF > 1) wird einer Gruppe von Quellpixeln jeweils eine Gruppe von Zielpixeln zugeordnet. Die Rechenoperationen sind so gestaltet, daß bei der Umsetzung im Mittel gleich viele hochaufgelöste Pixel entfernt wie hinzugefügt werden. Hierdurch wird erreicht, daß der Schwärzungsgrad eines Gesamtbildes im wesentlichen erhalten bleibt.

Nachteilig bei diesem Verfahren ist, daß die Umsetzung bezüglich der Quellpixel nur gruppenweise erfolgt. Insbesondere bei einem nicht ganzzahligen (gebrochenem) Skalierfaktor kann dann eines der Zielpixel ($\Phi$) nur wahlweise, d.h. relativ unmotiviert, einem Cluster benachbarter Zielpixel zugeordnet werden und nicht eindeutig einem Quellpixel. Die Zuordnung muß außerdem vorab in entsprechenden Verfahrensregeln festgelegt werden.

Ein Verfahren zur Umsetzung digitaler Bilddaten von einem ersten Raster in ein zweites Raster, das für nicht ganzzahlige Skalierungsfaktoren geeignet ist, ist auch in der deutschen Patentanmeldung 197 13 079.8 beschrieben. Dieses Verfahren arbeitet ebenfalls bereichsorientiert. Dabei ist jedem Quellbereich ein Zielbereich zugeordnet ist, wobei die beiden Bereiche im Gesamtbild die selbe Position haben. Innerhalb des Zielbereichs werden boolsche Rechenregeln vorgegeben, nach denen die Umsetzung erfolgt.

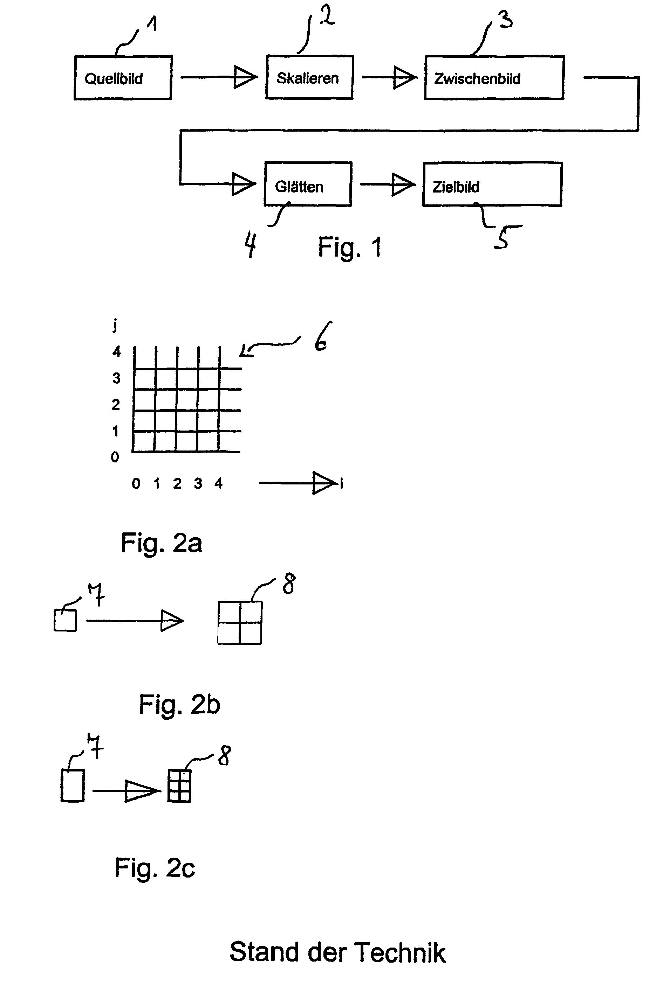

Eine weitere Verfahrensweise zum Skalieren und Glätten von Bilddaten ist aus der EP 506 379 B1 sowie aus der US 5,270,836 bekannt. Bei dieser Verfahrensweise sind zwei Schritte zum Skalieren und Glätten vorgesehen. Wie in Figur 1 schematisch dargestellt ist, wird bei dieser Verfahrensweise ein Quellbild 1, das in einem Quellraster vorliegt, im ersten Schritt 2 skaliert, wodurch ein Zwischenbild 3 im Zielraster entsteht. Auf Basis dieses Zwischenbildes wird im zweiten Schritt 4 die Glättung im Zielraster durchgeführt, wodurch das Zielbild 5 entsteht.

Nachteilig bei der oben beschriebenen Verfahrensweise ist, daß zum Glätten jeweils eine Vielzahl von Daten im Zielraster berücksichtigt werden muß. Wegen der dabei erforderlichen, relativ großen Zahl an Speicherzugriffen und Rechenoperationen ist der damit verbundene Aufwand relativ hoch und eignet sich deshalb kaum für Anwendungen wie Hochleistungsdrucksystemen, bei denen es auf die Schnelligkeit der Umsetzung ankommt. Eine Realisierung des Verfahrens auf Basis von Software erscheint damit ebenfalls kaum möglich.

Auch im Bereich der Telefaxübertragung kann eine Skalierung und Glättung von Übertragungsdaten nötig sein, wenn die Daten beispielsweise in einer ersten Auflösung empfangen, aber in einer anderen Auflösung gespeichert, weitergeleitet oder ausgedruckt werden sollen. Ein entsprechendes Verfahren für diese Anwendung ist beispielsweise in der US 5,394,485 A beschrieben.

Ein weiteres Verfahren zur Umsetzung von Bilddaten ist aus der DE 42 06 277 A1 bekannt. Bei diesem Verfahren erfolgt nur eine Rasterumsetzung, aber keine Glättung der Bilddaten. Aus der EP 708 415 A2 ist ebenfalls ein Verfahren zur Umsetung von Bilddaten bekannt, das allerdings nur für ganzzahlige Skalierfaktoren geeignet ist. In der EP 0 006 351 A1 ist ein Bildverarbeitungssystem beschrieben, welches mit Look-up-Tabellen arbeitet. Die US 5,657,430 A beschreibt ein Verfahren zur Umsetzung von Vektor-Fonts auf Graustufen-Bitmaps.

Aus der US-A-5,646,741 sind ein Verfahren und eine Vorrichtung bekannt, in denen Bildsignale skaliert und geglättet werden. Dabei wird im Quellbereich nach vorgegebenen Kriterien überprüft, ob eine Glättung durchgeführt werden soll und gegebenenfalls die Quellbildsignale geglättet. Danach werden die geglätteten Bildsignale skaliert.

Aus der WO-A-96/16380 ist ein System und ein Verfahren zum Interpolieren von Bildsignalen bekannt. Dabei wird jeweils aus einer Vielzahl von Interpolationsregeln eine Regel ausgewählt. Die Quellbildsignale werden dann in mehreren, aufeinanderfolgenden Schritten verarbeitet. In einem ersten Schritt werden die Bildsignale zeilenweise anhand einer ausgewählten, zeilenweisen Regel interpoliert. Dann werden die Bildsignale in einem zweiten Schritt spaltenweise anhand einer zweiten, spaltenweisen Regel interpoliert. Schließlich werden die Zeilen-Bildsignale und die Spalten-Bildsignale durch eine Formatierungseinheit seitenweise zusammengesetzt.

Aufgabe der Erfindung ist es, ein Verfahren zur Umsetzung digitaler Bilddaten von einem ersten Raster in ein zweites Raster anzugeben, das zu einer hohen Verarbeitungsgeschwindigkeit führt und das sowohl eine Skalierung als auch eine Glättung der Bilddaten durchführt.

Diese Aufgabe wird durch die in den Patentansprüchen 1 und 3 angegebene Erfindung gelöst. Vorteilhafte Ausführungsformen der Erfindung ergeben sich aus den Unteransprüchen.

Gemäß einem ersten Aspekt der Erfindung werden die Daten um mindestens einen Skalierfaktor skaliert und jedem Quelldatum einzelpixelweise, bezüglich dem Quellpixel also pixelindividuell, anhand eines das Quellpixel umgebenden Umgebungsfensters eine Zielbild-Matrix zugeordnet. Aus benachbarten Zielbild-Matrizen werden die Zieldaten bestimmt, wobei die Daten im Raster der Quelldaten geglättet werden. Jedes Quelldatum wird zum Glätten aller benachbarten Quelldaten verwendet.

Gemäß dem ersten Aspekt der Erfindung wird die Glättung der Daten im Raster der Quelldaten durchgeführt und nicht im Zielraster. Hierdurch ist eine wesentlich schnellere Datenverarbeitung bei zweidimensionalen Bilddaten möglich als bei vergleichbaren Verfahren, die die Glättung erst im Zielraster durchführen, weil die Datenmenge, auf die die Glättungsfunktion angewandt wird, wesentlich geringer ist. Für den Fall gleicher Skalierungsfaktoren in x- und in y-Richtung ($SF = SF_x = SF_y$) ist diese Verarbeitungsgeschwindigkeit annähernd um das Quadrat des Skalierungsfaktors SF geringer. Der erste Askekt der Erfindung ist insbesondere zur Umsetzung von Bilddaten bei einem nicht ganzzahligen (gebrochenen) Skalierfaktor geeignet. Durch die auf Einzelpixel basierende Verarbeitung wird der Vorteil gegenüber bisher bekannten Verfahren erreicht, daß die Verarbeitung der Daten bei gebrochenem Skalierfaktor nahezu analog zur Verarbeitung bei ganzzahligem Skalierfaktor erfolgen kann.

Dem ersten Aspekt der Erfindung liegt die Erkenntnis zugrunde, daß mit einer Glättung im Quellraster das selbe Ergebnis erreichbar ist wie mit einer Glättung, die auf die wesentlich größere Zahl der Daten im Zielraster angewandt wird, weil die zu glättenden Strukturen bereits aus dem Quell-Image zu bestimmen sind. Das Skalieren eines Bildes um einen Faktor größer als eins erhöht zwar die Anzahl der zu glättenden Pixel, der Informationsgehalt der dem Bild zugrunde liegenden Bitmap bleibt allerdings unverändert. Versuche ergaben, daß eine Glättung mit Regeln, die im Zielraster aufgestellt werden, keine anderen Ergebnisse erbringt als wenn entsprechende Regeln zur Glättung bereits auf der Basis der Daten im Quellraster aufgestellt werden.

Ferner wurde erkannt, daß die zum Glätten notwendige Zeit in erster Näherung (d.h., ohne Betrachtung der Bildränder) direkt proportional zur Größe des Bildes ist und die Abarbeitung der Daten im Quellraster deshalb schneller erfolgen kann als die Abarbeitung der Daten im Zielraster.

Ausgehend vom bekannten Stand der Technik wurde insbesondere erkannt, daß ein allgemeines Glättungsverfahren im Zielbereich von der Existenz aller Pixel-Kombinationen ausgeht. Da die Pixel aber hochskaliert wurden, existiert nur eine beschränkte Anzahl von Variationsmöglichkeiten. Der Informationsgehalt der Pixel wird durch das Hochskalieren nicht erhöht. Durch das erfindungsgemäße Glätten der Bilddaten im Quellraster kann der Zeitbedarf für das Verarbeiten der Daten gegenüber Verfahren, die im Zielraster glätten, um das Quadrat des Skalierfaktors verringert werden.

Ein Glätten mit den Daten des Quellbildes als Grundlage ermöglicht auch eine kleinere Größe der Erkennungsmatrix. Bei Skalierfaktor 2 erreicht eine Erkennungsmatrix von 3 x 3 im Quell - Bereich beispielsweise die gleiche Qualität wie eine 5 x 5 - Erkennungsmatrix, die im Zielbereich angewandt wird. Dies hat zur Folge, daß im Quellbereich nur 3 x 3 = 9 Pixel zur Erkennung berücksichtigt werden müssen anstatt 5 x 5 = 25 Pixel im Zielbereich. Die Verarbeitungsgeschwindigkeit des erfindungsgemäßen Verfahrens bei direkter logischer Auswertung (in Hard - oder Software) wird also in zweifacher Hinsicht erhöht: zum einen sind im Quellraster weniger Daten als im Zielraster auszuwerten, zum anderen kann im Quellraster die Größe des Glättungsfensters verringert werden. Die Verarbeitungsgeschwindigkeit ist dann bis zu einem Faktor von 25/9 x $SF_x$ x $SF_y$ höher als bei konventionellen Verfahren. Der logische Aufwand, beispielsweise für Gatterfunktionen sinkt um diesen Faktor. Bei einer Realisierung mittels look-up-Tabellen - die bei Softwarelösungen häufig zur Performance - Steigerung benutzt werden, weil dadurch die bitweise logische Auswertung eingespart und das Ergebis direkt aus der Tabelle erhalten wird - ist für eine 3 x 3-Matrix eine Tabelle mit 512 Einträgen nötig. Bei einer 5 x 5 -Matrix muß diese Tabelle dagegen 33554432 Einträge (32 MB) groß sein. Eine Tabelle dieser Größe ist in der Praxis nicht mehr akzeptabel.

Die Erfindung ermöglicht es ferner, sowohl die Funktion des Glättens als auch die des Skalierens in einem einzigen Schritt durchzuführen, indem das gesamte Verfahren im Raster der Quelldaten durchgeführt wird. Das Verfahren kann dabei unabhängig von der Größe des jeweiligen Skalierfaktors durchgeführt werden. Der Skalierfaktor kann sowohl ganzzahlig als auch gebrochen sein.

In einem zweiten Aspekt der Erfindung werden digitale Quelldaten im Raster einer ersten Auflösung in digitale Zieldaten im Raster einer zweiten Auflösung um einen Skalierfaktor skaliert und geglättet. Dabei wird eine Skalierungsregel vorgegeben und aus mehreren Glättungsregeln eine bestimmte Glättungsregel. Die beiden vorgegebenen Regeln werden dann zu einer kombinierten Skalierungs- und Glättungsregel derart zusammengeführt, daß die Glättung im Raster der Quelldaten erfolgt, wobei jedes Quelldatum zum Glätten mehrerer benachbarter Quelldaten verwendet wird. Der Skalierfaktor ist insbesondere nicht ganzzahlig und durch einen Bruch ganzer Zahlen darstellbar.

Durch den zweiten Aspekt der Erfindung wird ein hohes Maß an Flexibilität bei der Verarbeitung von Bilddaten erreicht. Insbesondere bei einer Umsetzung des Verfahrens mit einem Software-Programm können dabei eine Vielzahl von Glättungs,- und/oder Skalierungsverfahren frei miteinander kombiniert werden und beim Drucken von Bildern sehr flexibel auf unterschiedlichste Druckdaten und Druckerauflösungen reagiert werden. Individuelle (auftragsspezifische) Saklier,- und/oder Glättungsregeln können dabei entweder bereits im Druckauftrag oder in der Druckeinrichtung, z.B. durch einen Bediener, vorgegeben oder ausgewählt werden

In einem dritten Aspekt der Erfindung werden pro Bildpunkt (Pixel) nicht nur binäre Daten (schwarz-weiß) verarbeitet, sondern pro Bildpunkt mehrere Bits oder Bytes umfassende Grauwerte oder Farbwerte. Dabei ist es einerseits möglich eine "Graustufenumsetzung" durchzuführen, bei der sich das Raster auf die Graustufen bezieht und somit pro Bildpunkt von einem ersten Graustufen-Raster umgesetzt wird in ein zweites Graustufen-Raster, beispielsweise 4-Bit-Graustufenwerte entsprechend 16 Graustufen auf 6-Bit-Graustufenwerte entsprechend 64 Graustufen hochskaliert werden. Dabei kann auch eine Graustufen-Glättung erfolgen indem feiner abgestufte Grauwert-Übergänge zwischen den Bildpunkten im Zielraum erzeugt werden. Andererseits ist es dabei auch möglich, die mit Grauwerten behafteten Bildpunkte im Ortsraum (also im dots-perinch-Raster) umzusetzen in ein feineres Ortsraum-Raster unter Beibehaltung der Graustufen-Auflösung. Analog zu diesen Graustufen-Umsetzungsvarianten können auch Farbstufen-Umsetzungen, beispielsweise ein Hochskalieren von einem 32-Farbbit-Raster in ein höher auflösendes 48-Farbbit-Raster, erfolgen. Dadurch ist auch eine zur Graustufen-Glättung analoge Farbglättung durchführbar.

Die Skalierungen und Glättungen im Ortsraum, im Graustufenraum und im Farbraum können dabei untereinander beliebig kombiniert werden.

In einem vierten Aspekt der Erfindung erfolgt die Verarbeitung der Daten byte-orientiert. Dabei kann mehreren Bildpunkten jeweils eine binäre Information zugeordnet sein und die Daten parallel verarbeitet werden. Den Bildpunkten (Pixeln) können aber auch Graustufen und/oder Farbwerte zugeordnet sein, die ihrerseits pro Pixel mehrere Bits oder Bytes umfassen. Eine byteweise Verarbeitung wirkt sich positiv auf die Verarbeitungsgeschwindigkeit aus, weil digitale elektronische Komponenten, insbesondere im Bereich der Informationsverarbeitung, die Daten intern ebenfalls byteweise verarbeitet und weil dieses das Byte-Format ein allgemein übliches Speicherformat ist.

Die Daten werden dabei in einem Register mit jedem Verarbeitungstakt um eine bestimmte, von der Höhe des Glättungsfensters abhängigen Anzahl von Positionen verschoben (geshiftet); nach Speicherung einer entsprechenden Anzahl von Bytes (beispielsweise 3 Byte für eine Verarbeitung von 3 Zeilen mit je 8 Pixeln, auf die jeweils ein 3 x 3-Glättungsfenster wirken soll) stellen benachbarte Daten einen Index dar. Dieser Index kann direkt zur Adressierung einer entsprechenden Glättungsmatrix (z.B. 3 x 3)verwendet werden, wobei die Adressierung entweder als Eingangssignal einer Hardwareschaltung oder innerhalb einer Computer-Software direkt auf eine Look-Up-Tabelle wirkt. Die zweidimensionale Aufgabenstellung, Bilddaten zu verarbeiten, wird dabei in eine eindimensionale Aufgabenstellung umgewandelt.

In einem bevorzugten Ausführungsbeispiel wird ein Schieberegister mit jeweils n Bytes pro Zeile pro Verarbeitungstakt nach folgenden Regeln befüllt:

$$R_0 \text{ bis } R_{(A-1)} \text{ bleiben unberührt (Regel 1)}$$

und

$$R_{(i+A)} = q(i/Q_y/\ Q_y\ -1-(i\%Qy))$$

oder

$$R_{(i+A)} = q(i/Q_y,\ i\%Q_y) \text{ (Regel 2)},$$

wobei gilt:

| | |
|---|---|
| $R_i$: | Wert des i-ten Registerpixels |
| $Q_x$: | Fensterbreite in x-Richtung |
| $Q_y$: | Fensterbreite in y-Richtung |
| q(k,l): | Wert des Quellpixels mit der Position (k,l) |
| /: | Integer-Division |
| %: | Modulo-Division und |

$A = W \times (Q_y \times (Q_x -1))$. Das Schieberegister hat dabei eine Breite $B = Q_y \times W \times ((8n/W) - 1 + Q_x)$, wobei 8n/W ganzzahlig ist, mit

| | |
|---|---|
| W: | Wertigkeit eines Pixels, d.h. Bit pro Pixel (binär, Graustufenwert, Farbwert) |
| B: | Breite des Schieberegisters in Bit |

Für $W = 1$ (binäre Daten) erhält man $B = Q_y \times (8n-1 + Q_x)$.

Es hat sich gezeigt, daß das erfindungsgemäße Verfahren insbesondere bei einer Realisierung in Form eines Software-Programms auf einem Computer deutlich schneller abläuft als vergleichbare Verfahren, die zunächst eine Skalierung durchführen, das Ergebnis in einem Zwischenspeicher ablegen und erst dann die Glättung an den zwischengespeicherten Daten, d.h. im Zielraster durchführen. Vorteilhaft.bei einer Umsetzung mittels Software ist, daß die Umschaltung sehr bedarfsgerecht innerhalb eines Druckjobs erfolgen kann - ist eine Umsetzung erfoderlich, erfolgt diese mit den entsprechenden Modulen des Umsetzungsprogramms. Wenn keine Umsetzung erforderlich ist, dann werden die Daten weitergegeben, ohne von dem Umsetzungsprogramm bearbeitet zu werden. Die Flexibilität kann dabei soweit gesteigert sein, daß sogar innerhalb eines auszudruckenden Dokuments, d.h. innerhalb einer Seite, verschiedene Auflösungen verarbeitet werden. Während beispielsweise Text in einer Auflösung von 300 dpi durchaus gut zur Geltung kommt, ist es bei der Wiedergabe von Bildern in der Regel zweckmäßig, eine Auflösung 600 dpi oder höher zu wählen.

Bei der Glättung kann es erforderlich sein, zwischen Bildinformation und Textinformation zu unterscheiden und jeweils unterschiedliche bzw. keine Glättung vorzunehmen, beispielsweise um Moire-Effekte zu vermeiden. Wird die Erfindung in einer Software angewandt, so kann der Vorteil erreicht werden, daß kein Aufwand zur Unterscheidung zwischen Texten und Bildern innerhalb eines Druckauftrages erforderlich ist. Diese Information ist vielfach bereits im Druckauftrag in Form unterschiedlicher Objektkennzeichen enthalten und kann zur Einstellung der Glättungsregeln verwendet werden.

Das Skalieren und Glätten kann in einem gemeinsamen Schritt mit einer Look-up-Tabelle erfolgen, die Daten für beide Vorgänge enthält. Vorzugsweise werden die Quelldaten dabei direkt zur Adressierung der Look-up-Tabelle verwendet.

Weitere Vorteile und Wirkungen der Erfindung werden anhand der folgenden Beschreibung deutlich, die durch Figuren ergänzt ist.

Es zeigen

| | |
|---|---|
| **Fig. 1** | eine Vorgehensweise nach dem Stand der Technik |
| **Fig. 2** | ein mathematisches Modell, das der Erfindung zugrunde liegt |
| **Fig. 3** | verschiedene Kombinationsmöglichkeiten bei einer Bilddaten-Umsetzung von 2 x 2 Quellpixeln |
| **Fig. 4** | ein Beispiel für eine Bilddaten-Umsetzung |
| **Fig. 5** | ein weiteres Beispiel für eine Bilddaten-Umsetzung |

**Fig. 6**    verschiedene Darstellungen einer schrägen Linie in einem Bildraster

**Fig. 7**    ein Glättungsfenster in einem Bildraster

**Fig. 8**    einen Skaliervorgang um einen Skalierfaktor 2

**Fig. 9**    einen Glättvorgang mit einer 5 x 5-Matrix

**Fig. 10**   eine Skalierung um den Faktor 2,5

**Fig. 11**   eine einem Glättvorgang zugrundeliegende Skizze

**Fig. 12**   verschiedene Fenster, auf denen eine Glättung beruht

**Fig. 13**   das Schema eines Glättungsergebnisses

**Fig. 14**   eine Veranschaulichung zur Überlagerung von Daten

**Fig. 15**   das Bearbeiten von Bilddaten mit einem Glättungsfenster

**Fig. 16**   Die Ablage zweidimensionaler Bilddaten in ein eindimensionales Register

**Fig. 17**   die Umsetzung mehrerer Pixel einer Quellzeile in Registerpixel

**Fig. 18**   einen Datenverarbeitungsprozess, bei dem skalierte und geglättete Zielbilddaten direkt aus den Quellbilddaten gewonnen werden

**Fig. 19**   eine Umsetzung digitaler Bilddaten in Indexbits

**Fig. 20**   eine Hardware-Anordnung zum Umsetzen digitaler Bilddaten

**Fig. 21**   ein Software-Konzept zum Umsetzen digitaler Bilddaten

**Fig. 22**   eine Variante zum Zusammensetzen von Zielbild-Matrizen ohne Überlagerung von Quellpixeln und

**Fig. 23**   das Ergebnis des Zusammensetzens der Figur 22.

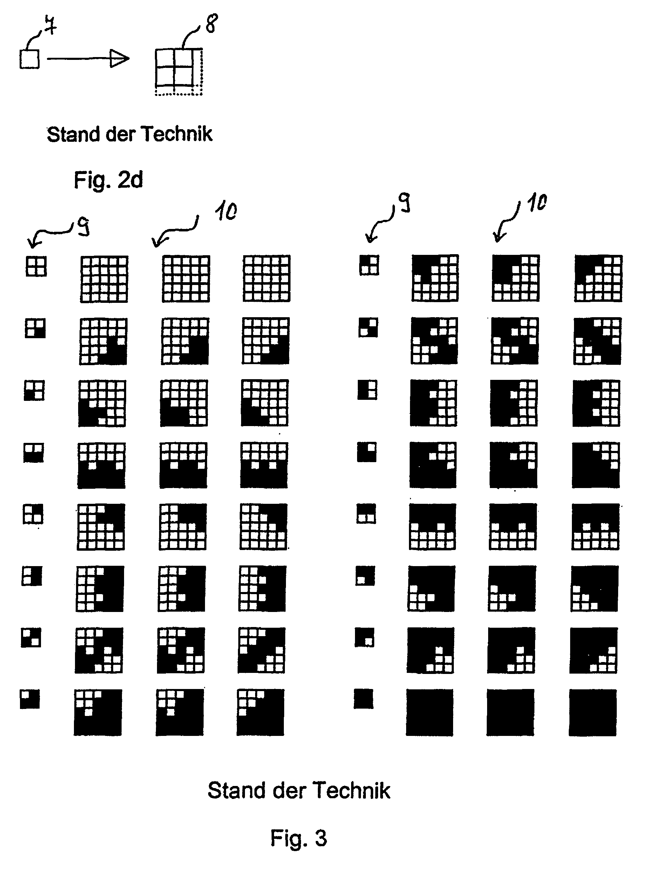

Anhand der Figur 2 erfolgt zunächst eine grundsätzliche Untersuchung und eine mathematische Modellierung der Skalierung. Den Betrachtungen für die Skalierung liegt das in Figur 2a dargestellte, diskrete i-j-Koordinatensystem 6 zugrunde, wobei i den Pixel-Index in x-Richtung und j den Pixel-Index in y-Richtung bezeichnet.

Figur 2b zeigt beispielhaft eine Skalierung um einen Skalierfaktor 2 wie er bei einer Umsetzung von einem 300 dpi-Quellraster auf ein 600 dpi-Zielraster vorkommt. Dabei wird jedes Quellpixel 7 zweidimensional behandelt, d. h. in jede der Richtungen x und y verdoppelt. Die Rasterabstände sind im Quellraster doppelt so groß wie im Zielraster. Aus einem Pixel 7 im Quellbereich werden vier Pixel 8 im Zielbereich. Wie in Figur 2c gezeigt ist, kann der Skalierfaktor auch unterschiedlich in den x- und y-Richtungen sein, beispielsweise den Wert 2 in x-Richtung und den Wert 3 in y-Richtung haben.

**Nicht ganzzahliger Skalierfaktor**

Soll ein nicht ganzzahliger Skalierfaktor zugrunde gelegt werden, beispielsweise der Skalierfaktor 2,5 entsprechend einer Umsetzung von einem 240-dpi-Quellraster auf ein 600 dpi-Zielraster, so wird analog wie bei ganzzahligen Skalierfaktoren vorgegangen. In Figur 2d ist diese Vorgehensweise schematisch dargestellt. Aus einem Pixel 7 im Quellbereich werden theoretisch 2,5 x 2,5 Pixel 8 im Zielbereich.

Da sich halbe Pixel digital nicht darstellen lassen, wird als Ausgangsbasis für den Skaliervorgang zunächst eine Gruppe von Pixeln betrachtet, wobei eine Lösung zu folgender Aufgabe gefunden werden muß:

"Gesucht wird die kleinste ganze Zahl an Quellpixeln für jede Koordinaten-Richtung, die bei der Skalierung zu einer ganzen Zahl an Zielpixeln in der selben Richtung führt."

Für eine Umsetzung von 240 dpi auf 600 dpi ist diese Bedingung beispielsweise mit 2 Quellpixeln und 5 Zielpixeln erfüllt. Geht man von einem 2 x 2-Pixel-Quadrat im Quellbereich aus, so erhält man bei Skalierfaktor 2,5 ein 5 x 5-Pixel-Quadrat im Zielbereich.

Aus den 2 x 2 Pixeln im Quellbereich ergeben sich 16 Kombinationen, die auf den Zielbereich abgebildet werden müssen. Diese 16 Kombinationen möglicher Quellquadrate 9 im Quellbereich sind in Figur 3 dargestellt, wobei schwarze Pixel für die binäre Information "1" stehen. Rechts neben den 2 x 2-Pixel-Quadraten der Quelldaten sind jeweils drei mögliche Zielquadrate 10 in der 5 x 5-Zielmatrix angegeben, auf die diese Quelldaten abgebildet werden können.

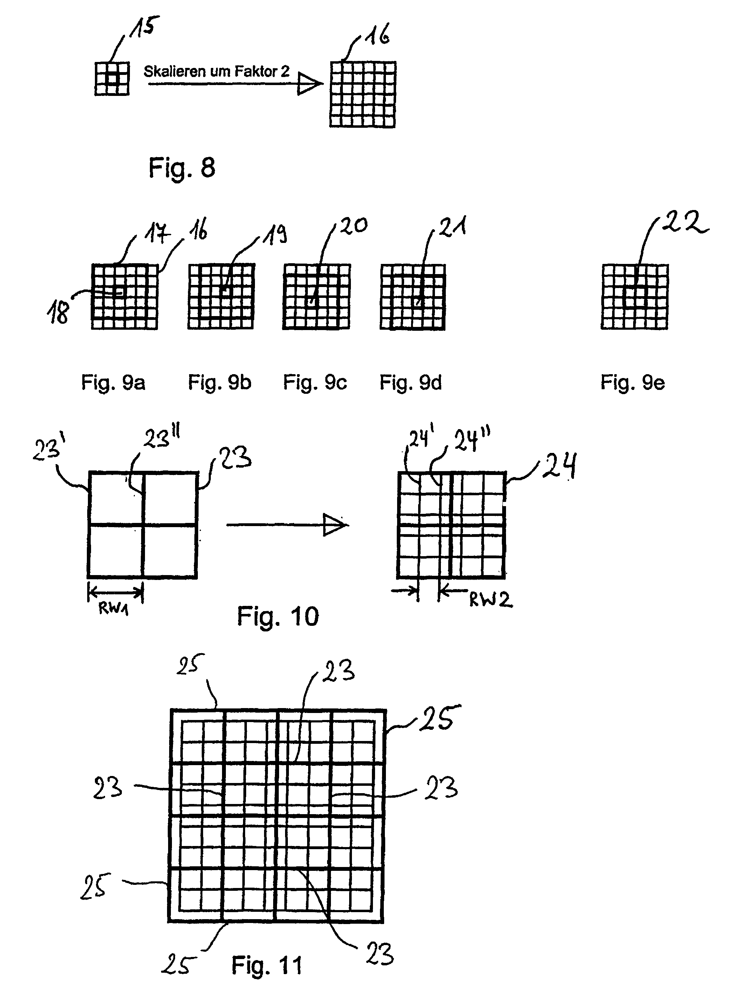

Ein Beispiel für eine Umsetzung mit einem nicht ganzzahligen Skalierfaktor wird weiter unten (Figuren 10 bis 13) angegeben.

**Mathematisches Modell für das Skalierverfahren**

Bei ganzzahligen Skalierfaktoren wird in einem ersten Skalierverfahren nach folgender Formel vorgegangen:

$$sc_{(i,j)} = q_{\left(\frac{i}{sx}, \frac{j}{sy}\right)} \qquad \text{(Gleichung 2),}$$

mit:

sc$_{(i,j)}$    Wert des zu berechnenden Zielpixels (0 oder 1)
i,j      Koordinaten im Zielraster
q$_{(a,b)}$    Wert des entsprechenden Quellpixels
sx      Skalierfaktor in x-Richtung
sy      Skalierfaktor in y-Richtung.

Ein Quellpixel wird auf ein Rechteck mit sx * sy Zielpixel abgebildet, d.h. mehrere Zielpixel werden von einem Quellpixel abgeleitet.

Die Zielpixel erhalten den gleichen Wert (0/1 bei binären Daten, Graustufen bzw. Farbwert bei nicht binären Daten) wie das Quellpixel. Bei nicht ganzzahligen Skalierfaktoren gehen die Skalierfaktoren als Bruch in Gleichung 2 ein:

$$sc_{(i,j)} = q_{(i*\frac{sx_N}{sx_Z}, \; j*\frac{sy_N}{sy_Z})} \hspace{4cm} \text{(Gleichung 3)}$$

mit

sx$_N$    Nenner des Skalierfaktors in x-Richtung
sx$_Z$    Zähler des Skalierfaktors in x-Richtung
sy$_N$    Nenner des Skalierfaktors in x-Richtung
sy$_Z$    Zähler des Skalierfaktors in y-Richtung

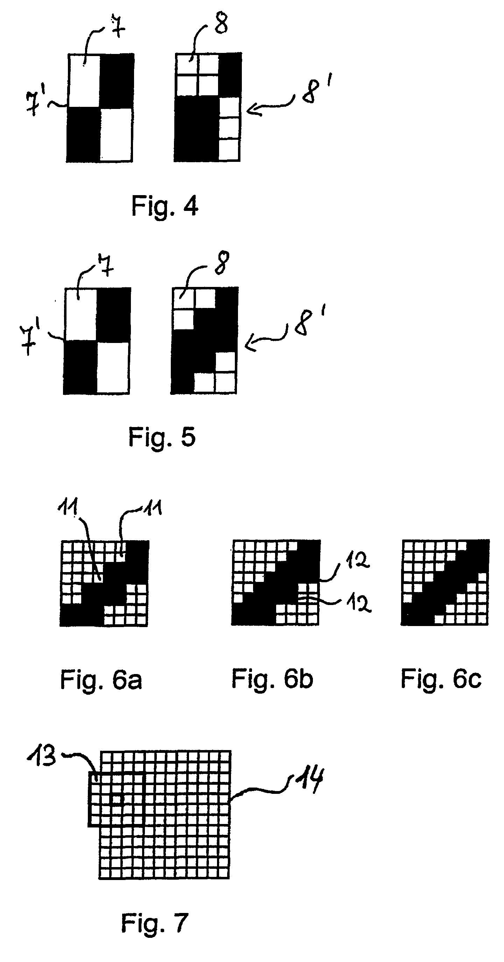

In Figur 4 ist ein entsprechendes Beispiel mit sx = 1.5 = 3/2 und sy = 2,5 = 5/2 gezeigt, wobei vier Quellpixel 7 in 15 Zielpixel 8 umgesetzt werden.

Skalieren mit nicht ganzzahligen Skalierfaktoren nach Gleichung 3 ergibt unsymmetrische Ergebnisse. Wie bei ganzzahligen Skalierfaktoren wird jedes Zielpixel aus einem Quellpixel abgeleitet. Die Anzahl der Zielpixel, die aus einem bestimmten Quellpixel abgeleitet wird, hängt dabei aber vom Ort der Zielpixel ab und ist nicht immer gleich, daher entsteht eine Unsymmetrie.

Eine Verbesserung gegenüber dem ersten Skalierverfahren erhält man, wenn ein Rechteck aus sx$_N$ * sy$_N$ Quellpixeln zu einem Block 7' zusammengefasst wird, der sich im Zielbereich ohne Teilpixel darstellen läßt. Solche Rechtecke werden blockweise in entsprechende Zielblöcke 8' mit sx$_z$ x sy$_z$ Zielpixeln skaliert, indem jedes Zielpixel über eine logische Gleichung von den Quellpixeln aus dem Quellblock abgeleitet wird. Jedes Zielpixel kann dann von mehreren bzw. von einem bis zu von allen Quellpixeln abhängig sein. Die zu Figur 4 beschriebene Umsetzung könnte dann so aussehen wie in Figur 5 dargestellt.

Dabei werden folgende logische Gleichungen angewandt:

$$sc(0/0) = sc(0,1) = q(0,0)$$

$$sc(0,3) = sc(0,4) = q(0,1)$$

$$sc(2,0) = sc(2,1) = q(1,0)$$

$$sc(2,3) = sc(2,4) = q(1,1)$$

$$sc(1,0) \; (q(0,0) \; \&\& \; !q(1,1)) \; || \; (q(0,1) \; \&\& \; !q(1,0))$$

$$sc(1,4) = (q(1,0) \; \&\& \; !q(0,1)) \; || \; (q(1,1) \; \&\& \; !q(0,0))$$

$$sc(0,2) = q(0,0) \,\|\, q(0,1)$$

$$sc(2,2) = q(1,0) \,\|\, q(1,1)$$

$$sc(1,1) = (q(0,0) \,\&\&\, q(1,0)) \,\|\, (q(0,0) \,\&\&\, q(1,1)) \,\|\,$$

$$(q(1,0) \,\&\&\, q(0,1))$$

$$sc(1,3) = (q(0,1) \,\&\&\, q(1,1)) \,\|\, (q(0,1) \,\&\&\, q(1,0)) \,\|\,$$

$$(q(1.1) \,\&\&\, q(0,0))$$

$$sc(1,2) = (q(0,0) \,\&\&\, q(1,1)) \,\|\, (q(1,0) \,\&\&\, q(0,1))$$

Für jedes Zielpixel existiert eine Gleichung, pro Block gibt es $sxZ * syZ$ Gleichungen, die Abhängigkeiten von $sxN * syN$ Quellpixeln enthalten. Dies sieht dann in allgemeiner Form so aus:

$$sc_{(i,j)} = fscal\langle i\%sxZ, j\%syZ\rangle(q_{(i*\frac{sx_N}{sx_Z}-(i\%SX_N)+0,\; j*\frac{sy_N}{sy_Z}-(j\%SY_N)+0)},...,$$

$$q_{(i*\frac{sx_N}{sx_Z}-(i\%SX_N)+(SX_N-1),\; j*\frac{sy_N}{sy_Z}-(j\%SY_N)+0)},$$

$$...$$

$$q_{(i*\frac{sx_N}{sx_Z}-(i\%SX_N)+0,\; j*\frac{sy_N}{sy_Z}-(j\%SY_N)+SY_N-1)},...,$$

$$q_{(i*\frac{sx_N}{sx_Z}-(i\%SX_N)+SX_N-1,\; j*\frac{sy_N}{sy_Z}-(j\%SY_N)+SY_N-1)}) \qquad \text{(Gleichung 4)},$$

wobei wiederum gilt:

- :=     Integer Division
% :=     Modulo Division.

Gleichung 4 beschreibt ein allgemeines Skalierverfahren, unter das die beiden oben beschriebenen Skalierverfahren fallen.

Es existieren $(sx_Z * sy_Z)$ logische Gleichungen mit jeweils bis zu $(sx_N * sy_N)$ Abhängigen. An den oberen und rechten Rändern kann es vorkommen, daß die Quellblöcke nicht vollständig mit Quellpixeln belegt sind, die Breite und Höhe des Quellbildes ist beliebig und nicht unbedingt ein Vielfaches der Quellblöcke. Nicht vorhandene Elemente müssen als nicht gesetzt angenommen werden, üblicherweise weiß (0).

## Mathematische Modellierung der Kantenglättung im Zielraster

Bei einer Kantenglättung wird jedes Pixel in seiner Umgebung betrachtet. Dazu wird ein quadratisches Glättungsfenster (Glättungsmatrix) mit ungerader Pixel-Kantenlänge über alle zu glättenden Pixel hinweggeschoben. Abhängig von der Umgebung und dem eigenen Pixelwert (der erkannten Struktur im Glättungsfenster) wird entschieden, ob das Pixel bei binären Daten schwarz oder weiß werden soll, bei Grau- oder Farbwerten wird der resultierende Wert bestimmt. In Summe über alle Pixel werden üblicherweise nur Pixelwerte verschoben, die Summe der gesetzten bzw. nicht gesetzten Pixel mit den digitalen Werten "0" bzw. "1" bzw. der durchschnittliche Grau,oder Farbwert bleibt nahezu gleich.

Gemäß dem aus der DE 195 06 792 A1 bekannten Verfahren erfolgt das Glätten durch Hinzufügen und Entfernen von Pixel, die zu erkennenden und zu korrigierenden Strukturen werden auch als Regeln bezeichnet. Die Größe der zu betrachtenden Umgebung (Größe des Glättungsfensters, der Glättungsmatrix) hängt von der Vorgabe ab, welche Strukturen zu Erkennen und zu Glätten sind.

Im folgenden wird die Umgebung eines Pixels in Form einer Ordnung der zu betrachtenden Nachbarn beschrieben. Nachbarn erster Ordnung sind die direkten Nachbarn, d.h., alle Pixel die mindestens eine Ecke mit dem zu untersuchenden Pixel teilen. Insgesamt ergibt dies das untersuchte Pixel und acht Nachbarn. Nachbarn zweiter Ordnung sind alle Pixel, die mit den Nachbarn erster Ordnung mindestens eine Ecke teilen usw.

Tabellarisch ergibt dies folgende Situation:

(Tabelle 1).

| zu erkennende Struktur | Ordnung | Größe des Glättungsfensters | zu betrachtende Pixel |
|---|---|---|---|
| 45°-Linien (1-1) | 1 | 3 x 3 | 9 |
| (1-2)1(2-1)- Linien | 2 | 5 x 5 | 25 |
| (1-3)/(3-1)- Linien | 3 | 7 x 7 | 49 |
| (1-4)/(4-1)- Linien | 4 | 9 x 9 | 81 |

Für eine Glättung mit einer 5 x 5-Erkennungsmatrix erhält man dann

$$sm_{(i,j)} = fsmooth(p_{(i-2,j-2)}, p_{(i-1,j-2)}, p_{(i,j-2)}, p_{(i+1,j-2)}, p_{(i+2,j-2)},$$

$$p_{(i-2,j-1)}, p_{(i-1,j-1)}, p_{(i,j-1)}, p_{(i+1,j-1)}, p_{(i+2,j-1)},$$

$$p_{(i+2,j)}, p_{(i-1,j)}, p_{(i,j)}, p_{(i+1,j)}, p_{(i+2,j)},$$

$$p_{(i+2,j+1)}, p_{(i-1,j+1)}, p_{(i,j+1)}, p_{(i+1,j+1)}, p_{(i+2,j+1)},$$

$$p_{(i-2,j+2)}, p_{(i-1,j+2)}, p_{(i,j+2)}, p_{(i+1,j+2)}, p_{(i+2,j+2)}) \qquad \text{(Gleichung 5)}.$$

Die allgemeine Gleichung für das Glätten im Zielraster lautet:

$$sm_{(i,j)} = fsmooth(p_{(i-\frac{G}{2},j-\frac{G}{2})},...., p_{(i+\frac{G}{2},j-\frac{G}{2})},$$

$$...., p_{(i,j)},$$

$$p_{(i-\frac{G}{2},j+\frac{G}{2})},...., p_{(i+\frac{G}{2},j+\frac{G}{2})}) \qquad \text{(Gleichung 6)},$$

wobei gilt:

an(i,j)   Wert des zu untersuchenden Pixels nach der Glättung
p   Wert eines Pixels aus dem Glättungsfenster
G   Größe des Glättungsfensters
fsmooth   Logische Gleichung mit G X G Abhängigen, welche die Glättung beschreibt und
-   Integer-Division.

Der oben beschriebene Glättungsvorgang wird im folgenden anhand des in Figur 6 dargestellten Beispiels mit binären Daten veranschaulicht. Dabei wird eine 45°-Linie geglättet.

Zunächst muß das Vorliegen einer zu glättenden Struktur untersucht werden. Dazu wird eine Erkennungs-Matrix aus 3 x 3 (oder 5 x 5, 7 x 7, ...) Pixeln über das Bild geschoben. Wird eine zu glättende Struktur erkannt, so wird der Wert des Pixels im Zentrum dieser Matrix für den Zielbereich bestimmt. Liegt dagegen keine zu glättende Struktur vor, so bleibt der Pixelwert unverändert. Die Bedingungen für das Vorliegen einer zu glättenden Struktur werden als Regeln bezeichnet.

Innerhalb des in Figur 6a dargestellten Bildes wird in Zeilenrichtung zunächst von links nach rechts vorgegangen. Dabei werden weiße Eckpixel 11 (leere Ecken an weiß-schwarz-Übergängen) an den durch die Regeln erkannten Strukturen auf "schwarz" gesetzt, wodurch das in Figur 6b dargestellte Bild entsteht. Pixel, auf die keine der Regeln Anwendung findet, bleiben unverändert. Dann werden von rechts nach links schwarze Eckpixel 12 an den durch die Regeln gegebenen Strukturen (bei weiß-schwarz-Übergängen) auf "weiß" gesetzt, wodurch das in Figur 6c dargestellte Bild entsteht.

Dasselbe Ergebnis (Figur 6c) kann erreicht werden, wenn bei dem in Figur 6a dargestellten Bildausschnitt von links nach rechts Eckpixel bei schwarz - weiß - Übergängen entfernt werden. Letzteres Verfahren ist einstufig, weil Zufügen und Entfernen in einem Arbeitsgang durchgeführt werden.

Zum Glätten digitaler Bilddaten werden folgende Regeln benutzt:

- Erkennen und Glätten von 45°-Linien (2-2-Linien, zwei Einheiten in x-Richtung, zwei in y-Richtung)

- Beibehalten von rechtwinkligen Ecken, nicht Glätten

- Erkennen und Glätten von 2-4-Linien

- Evtl. Erkennen und Glätten von 2-x-Linien, je nach Größe der Erkennungs - Matrix (x ist eine gerade Zahl > 2).

Berücksichtigt man alle Regeln für die vier Ausgangsrichtungen und für die Spiegelung (2-4-Linien sind dann äquivalent zu 4-2-Linien), so ergibt dies insgesamt acht Unterregeln.

### Randprobleme beim Glätten

An den Rändern des zu glättenden Bildes (oben, unten, links, rechts) stehen nicht alle Pixel für die Erkennungs - Matrix zur Verfügung. Nicht vorhandene Pixel (z.B. das in Figur 7 gezeigte Pixel 13 links neben dem Bildausschnitt 14) werden als nicht gesetzt, d.h. als weiß, betrachtet.

### Zusammenfassen von Skalieren und Glätten zu einem Verfahren, das im Quellraster arbeitet

Die beiden Verfahren zum Skalieren und zum Kantenglätten sollen nun kombiniert werden. Dazu wird die Glättungsgleichung 6 in eine der Skalierungsgleichungen 2 oder 3 eingesetzt.

Ausgehend von einer Skalierung mit ganzzahligen Skalierfaktoren nach Gleichung 2 erhält man

$$sm_{(i,j)} = fsmooth(q_{(\frac{i-\frac{G}{2}}{sx}, \frac{j-\frac{G}{2}}{sy})}, \dots q_{(\frac{i+\frac{G}{2}}{sx}, \frac{j-\frac{G}{2}}{sy})},$$

$$\dots, q_{(\frac{i}{sx}, \frac{j}{sy})},$$

$$q_{(\frac{i-\frac{G}{2}}{sx}, \frac{j+\frac{G}{2}}{sy})}, \dots, q_{(\frac{i+\frac{G}{2}}{sx}, \frac{j+\frac{G}{2}}{sy})}) \qquad \text{(Gleichung 7)}.$$

Betrachten wir ein spezielles Beispiel mit
sx = sy = 2 und G = 5:

$$sm_{(i,j)} = fsmooth(q_{(\frac{i-2}{2}, \frac{j-2}{2})}, \dots, q_{(\frac{i+2}{2}, \frac{j-2}{2})},$$

$$\dots, q_{(\frac{i}{2}, \frac{j}{2})}, \qquad \dots$$

$$q_{(\frac{i-2}{2}, \frac{j+2}{2})}, \dots, q_{(\frac{i+2}{2}, \frac{j+2}{2})})$$

$$= fsmooth(q_{(\frac{i}{2}-1, \frac{j}{2}-1)}, \dots, q_{(\frac{i}{2}+1, \frac{j}{2}-1)},$$

$$\dots, q_{(\frac{i}{2}, \frac{j}{2})}, \qquad \dots$$

$$q_{(\frac{i}{2}-1, \frac{j}{2}+1)}, \dots, q_{(\frac{i}{2}+1, \frac{j}{2}+1)})$$

Für gerade i und gerade j folgt dann:

$$sm_{(i_g,j_g)} = fsmooth(q_{(\frac{i}{2}-1,\frac{j}{2}-1)},q_{(\frac{i}{2}-1,\frac{j}{2}-1)},q_{(\frac{i}{2},\frac{j}{2})},q_{(\frac{i}{2},\frac{j}{2}-1)},q_{(\frac{i}{2}+1,\frac{j}{2}-1)},$$
$$q_{(\frac{i}{2}-1,\frac{j}{2}-1)},q_{(\frac{i}{2}-1,\frac{j}{2}-1)},q_{(\frac{i}{2},\frac{j}{2}-1)},q_{(\frac{i}{2},\frac{j}{2}-1)},q_{(\frac{i}{2}+1,\frac{j}{2}-1)},$$
$$q_{(\frac{i}{2}-1,\frac{j}{2})},q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},$$
$$q_{(\frac{i}{2}-1,\frac{j}{2})},q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},$$
$$q_{(\frac{i}{2}-1,\frac{j}{2}+1)},q_{(\frac{i}{2}-1,\frac{j}{2}+1)},q_{(\frac{i}{2},\frac{j}{2}+1)},q_{(\frac{i}{2},\frac{j}{2}+1)},q_{(\frac{i}{2}+1,\frac{j}{2}+1)})$$

Für ungerade i und gerade j:

$$sm_{(i_u,j_g)} = fsmooth(q_{(\frac{i}{2}-1,\frac{j}{2}-1)},q_{(\frac{i}{2},\frac{j}{2}-1)},q_{(\frac{i}{2},\frac{j}{2}-1)},q_{(\frac{i}{2}+1,\frac{j}{2}-1)},q_{(\frac{i}{2}+1,\frac{j}{2}-1)},$$
$$q_{(\frac{i}{2}-1,\frac{j}{2}-1)},q_{(\frac{i}{2},\frac{j}{2}-1)},q_{(\frac{i}{2},\frac{j}{2}-1)},q_{(\frac{i}{2}+1,\frac{j}{2}-1)},q_{(\frac{i}{2}+1,\frac{j}{2}-1)},$$
$$q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},q_{(\frac{i}{2}+1,\frac{j}{2})},$$
$$q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},q_{(\frac{i}{2}+1,\frac{j}{2})},$$
$$q_{(\frac{i}{2}-1,\frac{j}{2}+1)},q_{(\frac{i}{2},\frac{j}{2}+1)},q_{(\frac{i}{2},\frac{j}{2}+1)},q_{(\frac{i}{2}+1,\frac{j}{2}+1)},q_{(\frac{i}{2}+1,\frac{j}{2}+1)})$$

$$sm_{(i_g,j_u)} = fsmooth(q_{(\frac{i}{2}-1,\frac{j}{2}-1)},q_{(\frac{i}{2}-1,\frac{j}{2}-1)},q_{(\frac{i}{2},\frac{j}{2}-1)},q_{(\frac{i}{2},\frac{j}{2}-1)},q_{(\frac{i}{2}+1,\frac{j}{2}-1)},$$
$$q_{(\frac{i}{2}-1,\frac{j}{2})},q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},$$
$$q_{(\frac{i}{2}-1,\frac{j}{2})},q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},$$
$$q_{(\frac{i}{2}-1,\frac{j}{2}+1)},q_{(\frac{i}{2}-1,\frac{j}{2}+1)},q_{(\frac{i}{2},\frac{j}{2}+1)},q_{(\frac{i}{2},\frac{j}{2}+1)},q_{(\frac{i}{2}+1,\frac{j}{2})},$$
$$q_{(\frac{i}{2}-1,\frac{j}{2}+1)},q_{(\frac{i}{2}-1,\frac{j}{2}+1)},q_{(\frac{i}{2},\frac{j}{2}+1)},q_{(\frac{i}{2},\frac{j}{2}+1)},q_{(\frac{i}{2}+1,\frac{j}{2}+1)})$$

Für gerade i und ungerade j:

$$sm_{(i_u,j_u)} = fsmooth(q_{(\frac{i}{2}-1,\frac{j}{2}-1)},q_{(\frac{i}{2},\frac{j}{2}-1)},q_{(\frac{i}{2},\frac{j}{2}-1)},q_{(\frac{i}{2}+1,\frac{j}{2}-1)},q_{(\frac{i}{2}+1,\frac{j}{2}-1)},$$
$$q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},q_{(\frac{i}{2}+1,\frac{j}{2})},$$
$$q_{(\frac{i}{2}-1,\frac{j}{2})},q_{(\frac{i}{2},\frac{j}{2})},q_{(\frac{i}{2},\frac{j}{2})},q_{(\frac{i}{2}+1,\frac{j}{2})},q_{(\frac{i}{2}+1,\frac{j}{2})},$$
$$q_{(\frac{i}{2}-1,\frac{j}{2}+1)},q_{(\frac{i}{2},\frac{j}{2}+1)},q_{(\frac{i}{2},\frac{j}{2}+1)},q_{(\frac{i}{2}+1,\frac{j}{2}+1)},q_{(\frac{i}{2}+1,\frac{j}{2}+1)},$$
$$q_{(\frac{i}{2}-1,\frac{j}{2}+1)},q_{(\frac{i}{2},\frac{j}{2}+1)},q_{(\frac{i}{2},\frac{j}{2}+1)},q_{(\frac{i}{2}+1,\frac{j}{2}+1)},q_{(\frac{i}{2}+1,\frac{j}{2}+1)})$$

Für ungerade i und ungerade j:

Betrachtet man die in den Formeln vorhandenen Abhängigen erhält man:

$$sm_{(i_g,j_g)} = fsmooth_{gg}(q_{(\frac{i}{2}-1,\frac{j}{2}-1)},q_{(\frac{i}{2},\frac{j}{2}-1)},q_{(\frac{i}{2}+1,\frac{j}{2}-1)},q_{(\frac{i}{2}-1,\frac{j}{2})},q_{(\frac{i}{2},\frac{j}{2})},q_{(\frac{i}{2}+1,\frac{j}{2})},$$
$$q_{(\frac{i}{2}-1,\frac{j}{2}+1)},q_{(\frac{i}{2},\frac{j}{2}+1)},q_{(\frac{i}{2}+1,\frac{j}{2}+1)})$$

$$sm_{(i_u,j_g)} = fsmooth_{ug}(q_{(\frac{i}{2}-1,\frac{j}{2}-1)}, q_{(\frac{i}{2},\frac{j}{2}-1)}, q_{(\frac{i}{2}+1,\frac{j}{2}-1)}, q_{(\frac{i}{2}-1,\frac{j}{2})}, q_{(\frac{i}{2},\frac{j}{2})}, q_{(\frac{i}{2}+1,\frac{j}{2})},$$
$$q_{(\frac{i}{2}-1,\frac{j}{2}+1)}, q_{(\frac{i}{2},\frac{j}{2}+1)}, q_{(\frac{i}{2}+1,\frac{j}{2}+1)})$$

$$sm_{(i_g,j_u)} = fsmooth_{gu}(q_{(\frac{i}{2}-1,\frac{j}{2}-1)}, q_{(\frac{i}{2},\frac{j}{2}-1)}, q_{(\frac{i}{2}+1,\frac{j}{2}-1)}, q_{(\frac{i}{2}-1,\frac{j}{2})}, q_{(\frac{i}{2},\frac{j}{2})}, q_{(\frac{i}{2}+1,\frac{j}{2})},$$
$$q_{(\frac{i}{2}-1,\frac{j}{2}+1)}, q_{(\frac{i}{2},\frac{j}{2}+1)}, q_{(\frac{i}{2}+1,\frac{j}{2}+1)})$$

$$sm_{(i_u,j_u)} = fsmooth_{uu}(q_{(\frac{i}{2}-1,\frac{j}{2}-1)}, q_{(\frac{i}{2},\frac{j}{2}-1)}, q_{(\frac{i}{2}+1,\frac{j}{2}-1)}, q_{(\frac{i}{2}-1,\frac{j}{2})}, q_{(\frac{i}{2},\frac{j}{2})}, q_{(\frac{i}{2}+1,\frac{j}{2})},$$
$$q_{(\frac{i}{2}-1,\frac{j}{2}+1)}, q_{(\frac{i}{2},\frac{j}{2}+1)}, q_{(\frac{i}{2}+1,\frac{j}{2}+1)})$$

Man kann nun erkennen, daß die Gleichungen für gerade und für ungerade (i,j) jeweils die gleichen Elemente enthalten.

Ausgehend von einem Quadrat der Kantenlänge zwei an zu berechnenden Zielpixeln, bei dem die linke untere Ecke gerade i und gerade j repräsentiert, läßt sich folgendes schließen:

- Aus neun Quellelementen bzw. neun Quellpixeln kann man vier Zielpixel bestimmen.

- Die vier Zielpixel werden zwar aus den gleichen Quellpixeln berechnet, die Abhängigen stehen aber an verschiedenen Stellen in den Ausgangsgleichungen, man erhält für jedes der vier Pixel eine eigene Gleichung. Um die geforderte Qualität einer Zielmatrix der Größe 5 zu erhalten reicht im Quellbereich eine Matrix der Größe 3 aus, d.h. die Gleichungen enthalten im Quellbereich nur 9 Abhängige anstatt 25 im Zielbereich.

- Aus einem Quellpixel (mit Umgebung) können vier Zielpixel parallel (nach eigenen Gleichungen) berechnet werden. Dadurch steigt zwar der Berechnungsaufwand, aber auch die Geschwindigkeit, die vier Zielpixel werden dabei parallel und unabhängig voneinander berechnet. Je nach Gleichungen ist ein Zusammenfassen bestimmter logischer Teiloperationen möglich.

- Zur Glättung wird nicht mehr das Zwischen-Bild herangezogen, das sx * sy (in unserem Fall 2*2=4) mal größer ist als das Quellbild. Beim glättenden Skalieren muß daher nur ein viertel der Datenmenge die Glättungsoperation durchlaufen.

- Die Skalierung ist im Prozeß enthalten, die Daten müssen nur einmal bearbeitet werden, nicht zweimal wie bei den oben beschriebenen, bekannten Verfahren.

- In Summe ermöglicht das glättende Skalieren im Quellraster eine schnellere Durchführung der Operationen bei gleicher Qualität als im zweistufigen Prozeß.

- Je größer der Skalierfaktor ist, umso größer ist der relative Gewinn durch das einstufige Verfahren zum Glätten und Skalieren.

- Das beschriebene Verfahren ermöglicht die Kombination aller Skalier- und Glättungsregeln, die sich nach den Gleichungen 2, 3, 4 und 6 beschreiben lassen.

Dieses Beispiel läßt sich wie folgt verallgemeinern:

- Ausgegangen wird von dem kleinsten Rechteck im Quellbereich, das sich direkt in den Zielbereich abbilden läßt (bei ganzzahligen Skalierfaktoren nur ein Pixel).

- Man zeichnet das Rechteck mit den Zielpixeln (Zielrechteck). Um jedes Eck-Zielpixel legt man die Glättungsmatrix mit Kantenlänge G im Zielbereich.

- Aus der Ausdehnung läßt sich die Größe des zu betrachtenden Quell-Rechtecks bestimmen.

- Alle Zielpixel im Zielrechteck lassen sich aus den Quell-Pixeln im Quell-Rechteck berechnen. Nur die Quellmatrix muß zur Berechnung durchlaufen werden. Die Pixel im Zielrechteck lassen sich parallel unabhängig voneinander bestimmen.

Anhand der Figuren 8 und 9 sollen die Verbesserungen veranschaulicht werden, die sich durch das Glätten der Bilddaten im Raster des Quellbildes ergeben.

Es wird von einem Quellbild ausgegangen, das um den Faktor 2 skaliert und dann geglättet werden soll. In dem Quellbild wird ein Bereich 15 von 3 x 3 Pixeln betrachtet. Nach dem Skalieren mit einem Faktor 2 wird daraus ein Bereich 16 des Zwischenbilds mit der Größe 6 x 6 Pixel erhalten.

Innerhalb des Bereichs 16 soll nun eine Glättung mit einer Filterfenster 17 der Größe 5 x 5 durchgeführt werden. Dieses 5 x 5 - Fenster läßt sich viermal in dem Bereich 16 unterbringen. Einmal wie in Figur 9a gezeigt und weiter wie in den Figuren 9b, 9c und 9d gezeigt. Jede der in den Figuren 9a bis 9d dargestellten Operationen läßt sich rechnerisch durch eine Erkennungsmatrix darstellen, wobei pro Matrix je ein Pixelwert bestimmt wird. Aus der in Figur 9a dargestellten Position des Filterfensters 17 wird beispielsweise der Wert des Pixels 18 berechnet.

Aus den Erkennungsmatrizen, die den Figuren 9a bis 9d zugrunde liegen, erhält man vier geglättete Ziel-Pixel 18, 19, 20 und 21. Diese Gruppe von Zielpixeln ist in Figur 9e gemeinsam mit 22 bezeichnet.

Die 3 x 3-Quell-Matrix 15 beschreibt 512 mögliche Pixelkombinationen. Für jede dieser Kombinationen läßt sich mit einem allgemeinen Skalierverfahren (Skalierfaktor 2) eine Zwischenmatrix bestimmen, aus der sich dann mit einer 5 x 5 - Glättung 4 Zielpixel ergeben. Das Skalieren und das Glätten kann in einem Schritt ausgeführt werden, da ein eindeutiger Zusammenhang zwischen Quellmatrix (Zentral - Pixel mit 8 Umgebungspixeln) und den Zielpixeln (Ziel - Matrix) besteht. Jedes Quellpixel wird dabei unter Berücksichtigung seiner Umgebung direkt in vier Zielpixel umgesetzt.

Bei einer größeren Quellmatrix (z.B. 5 x 5 Pixel), ist bei Skalierfaktor 2 eine Glättung mit einer größeren Erkennungsmatrix (z.B. mit einer 9 x 9-Matrix) möglich, um wieder 4 Ziel-Pixel zu erhalten. Folgende Gleichung beschreibt dieses Verhalten für ganzzahlige, in den x- und y-Richtungen gleiche Skalierfaktoren s:

$$e = s * (q_M - 1) + 1 \hspace{4cm} \text{(Gleichung 8)},$$

wobei

$q_M$: Größe der Quell - Matrix,
e: Größe der Erkennungsmatrix im Zielraster und
s: Skalierfaktor bezeichnen.

**Beispiel für nicht ganzzahlige Skalierfaktoren**

Ein Beispiel für einen Skalier- und Glättvorgang, bei dem Gleichung 6 mit sx = sy = 2.5 und G = 5 gilt, wird anhand der Figuren 10 bis 13 beschrieben. Ein Quellpixel-Quadrat 23 der Kantenlänge 2 entsprechend der durch die Rasterlinien 23' und 23'' vorgegebenen Rasterweite RW1 = 1/240 inch (Quellraster, 240 dpi) wird dabei auf ein Zielpixel-Quadrat 24 der Kantenlänge 5 entsprechend der durch die Rasterlinien 24' und 24'' vorgegebenen Rasterweite RW2 = 1/600 inch (Zielraster, 600 dpi) in der Skalierung abgebildet.

Um jedes der 5 x 5 Ziel-Pixel, das innerhalb des 2 x 2 Quellpixel-Quadrats 23 liegt, wird eine Glättüngsmatrix gelegt (Figur 11). Unter Berücksichtigung der Nachbarn erster Ordnung ergeben sich die Werte für die 5 x 5 Zielpixel nach obiger Beschreibung aus einer Gruppe 25 von 4 x 4 Quellpixeln, bei G=5.

**Besonderes Ausführungsbeispiel für nicht ganzzahlige Skalierfaktoren**

Im oben beschriebenen Verfahren werden 5 x 5 = 25 Zielpixel aus 4 x 4 = 16 Quellpixeln erzeugt. Realisiert man dieses Verfahren in Software mit einer Look-Up-Tabelle, so umfaßt diese Tabelle 65536 Einträge zu je 25 Bit. Aufgrund der byte-weisen Arbeitsweise von Mikroprozessoren sind dann 65536 x 4 Byte = 262144 Bytes durch die Tabelle belegt. Eine derart große Tabelle läßt sich meist nicht mehr im Cache-Speicher üblicher Mikroprozessoren unterbringen. Die Abarbeitung der Daten kann deshalb nur relativ langsam erfolgen. Um die Verarbeitungsgeschwindigkeit zu erhöhen, werden in einer verbesserten Verfahrensweise jeweils kleinere Gruppen von Quellpixeln gemeinsam verarbeitet, bei der je 3 x 3 Zielpixel nur von je 3 x 3 Quellpixeln abhängig sind. Der oben beschriebene Arbeitsgang wird dabei in vier Teilschritte unterteilt. Für jeden Schritt wird eine Tabelle verwendet, mit der aus 9 Quellpixeln 9 Zielpixel erzeugt werden. Dazu werden 4 x 512 Einträge ä 9 Bit bzw. eine Tabellengröße von 4096 Byte benötigt.

Gegenüber den o.g. 262144 Bytes ist dies eine Speicherreduktion um den Faktor 64. Die derart erzeugten, 3 x 3 Zielpixel werden dann in Form einer "ODER"-Operation übereinandergelegt.

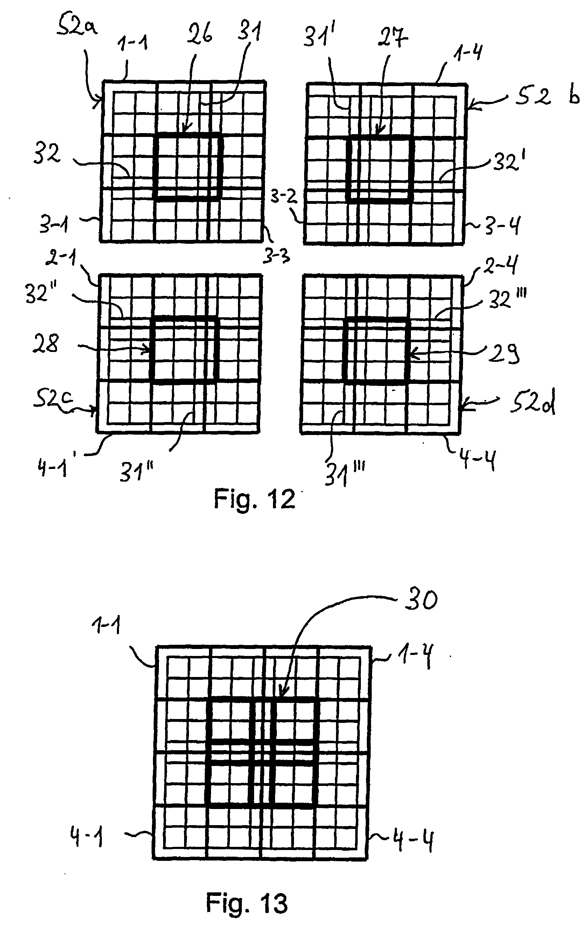

Die Figuren 12 und 13 veranschaulichen diesen Vorgang: In Figur 12 sind vier Quellpixel 2-2, 2-3, 3-2 bzw. 3-3 mit ihren jeweiligen Umgebungs-Quellpixeln gezeigt, also Quellpixel-Fenster 52a, 52b, 52c, 52d. Die Quellpixel liegen in einem 240 dpi-Raster vor. Aus den Quellpixeln 2-2, 2-3, 3-2 und 3-3 soll jeweils ein 3 x 3-Zielpixel-Quadrat (Matrix) 26, 27, 28 bzw. 29 gebildet werden, beispielsweise zu Quellpixel 2-2 das Zielpixel-Quadrat 26, zu Quellpixel 2-3 das Zielpixel-Quadrat 27 usw. Die Zielpixel-Quadrate 26, 27, 28, 29 werden dann so übereinandergelegt, daß jeweils die Linien 31, 31', 31" und 31''' miteinander fluchten sowie die Linien 32, 32', 32" und 32'''. Durch diese Überlagerung kommen gleiche Quellpixel (1-2, 1-3; 2-1..2-4; 3-1..3-4; 4-2, 4-3) der Quellpixel-Fenster 52a..52d deckungsgleich aufeinander zu liegen. Weiterhin ergibt sich dadurch das 5 x 5-Zielpixel-Quadrat 30 der Figur 13 entsprechend der höheren 600 dpi-Auflösung. Bezogen auf die umzusetzenden Quellpixel 2-2, 2-3, 3-2 und 3-3 erfolgt die Umsetzung dabei einzelpixelweise und bildzeilenweise nach folgenden Regeln:

In der ersten Bildzeile und allen Folgezeilen mit ungeradzahliger Zeilennummer werden das erste und alle nachfolgenden ungeradzahligen Quellpixeln gemäß dem Quellpixelfenster 52a umgesetzt (je eine Zielpixel-Matrix der Art 26 gebildet), das zweite und alle nachfolgenden geradzahligen Quellpixel dieser Zeilen werden gemäß Quellpixel-Fenster 52b umgesetzt (je eine Zielpixel-Matrix der Art 27 gebildet). In der zweiten Bildzeile und allen Folgezeilen mit geradzahliger Zeilennummer werden das erste und alle ungeradzahligen Folge-Quellpixel jeweils gemäß dem Quellpixel-Fenster 52c in eine Zielpixel-Matrix der Art 28 umgesetzt sowie die geradzahligen Quellpixel gemäß dem Quellpixel-Fenster 52d in eine Zielpixel-Matrix der Art 29.

Die soeben beschriebene Aufteilung in vier Schritte ist möglich, wenn die je 3 x 3 Zielpixel-Quadrate (Matrizen) 26, 27, 28, 29 in Figur 12 nur von den jeweils 3 x 3 Quellpixel-Fenstern 52a, 52b, 52c, 52d abhängig sind. Dies wird durch das verwendete Skalierverfahren vorgegeben und ist bei vielen Skalierverfahren auch gegeben. Die mit einer "ODER"-Operation übereinandergelegten Pixel sind gleich.

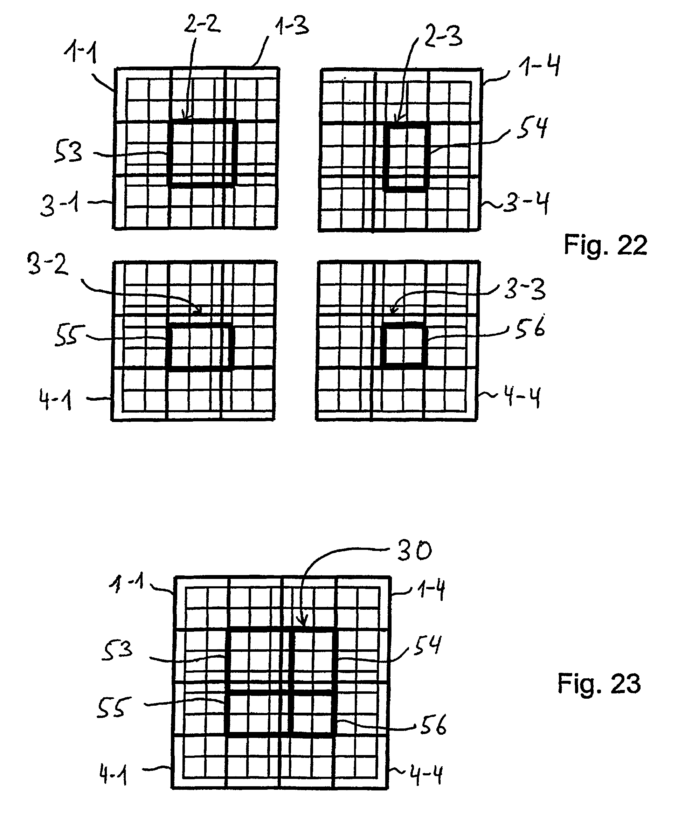

Alternativ zu dem beschriebenen symmetrischen Bestimmen und Zusammenfügen durch Ineinanderschieben (Überlappen) der Quellpixel ist auch ein unsymmetrisches Bestimmen und Zusammenfügen gemäß den Figuren 22 und 23 möglich. Dabei wird beispielsweise aus dem Quellpixel 2-2 ein 3 x 3- Zielpixel-Quadrat 53 gebildet, aus dem Quellpixel 2-3 ein 2 x 3-Zielpixel-Rechteck 54, aus dem Quellpixel 3-2 ein 3 x 2-Zielpixel-Rechteck 55 und aus dem Quellpixel 3-3 ein 2 x 2-Zielpixel-Quadrat 56. Die dadurch gebildeten Zielpixel-Rechtecke bzw. Quadrate 53, 54, 55 und 56 (Zielbild-Matrizen) werden dann ohne Überlapp als Zielbild zusammengefügt. Die übrigen, bei der symmetrischen Verarbeitung genannten Verfahrensschritte (z.B. Registereintrag, Indexbildung, zeilenweises Vorgehen) werden dabei identisch durchgeführt.

Die oben beschriebenen Varianten zur Bildung der Zielpixel-Quadrate können für bestimmte Implementierungen von Vorteil sein. Natürlich lassen sich die gleichen Prinzipien auch auf andere Werte von sx, sy und G anwenden.

**Byteweises Verarbeiten der Quellpixel zur Umwandlung des zweidimensionalen Problems in ein eindimensionales**

Das vorgestellte Verfahren wandelt Rechtecke von Quellpixein in Rechtecke von Zielpixeln um. Bei einer in Hardware, Software oder Firmware realisierten digitalen Datenverarbeitung läßt sich im allgemeinen ein Byte-orientiertes Vorgehen besser auf die Arbeitsweise der elektronischen Komponenten abbilden als ein Bit-orientiertes Vorgehen. Quellpixel liegen im allgemeinen als Quellimage in einem Speicherbereich vor, der Byte-orientiert in Zeilen organisiert ist. Eine gespeicherte Zeile entspricht dabei einer Bildzeile (Scanline).

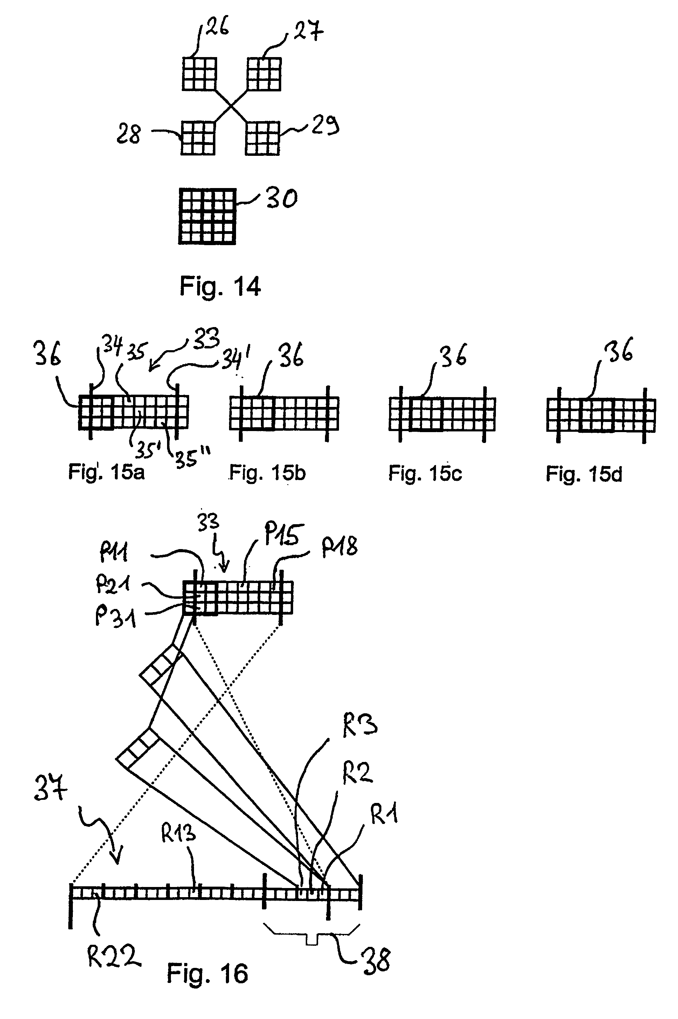

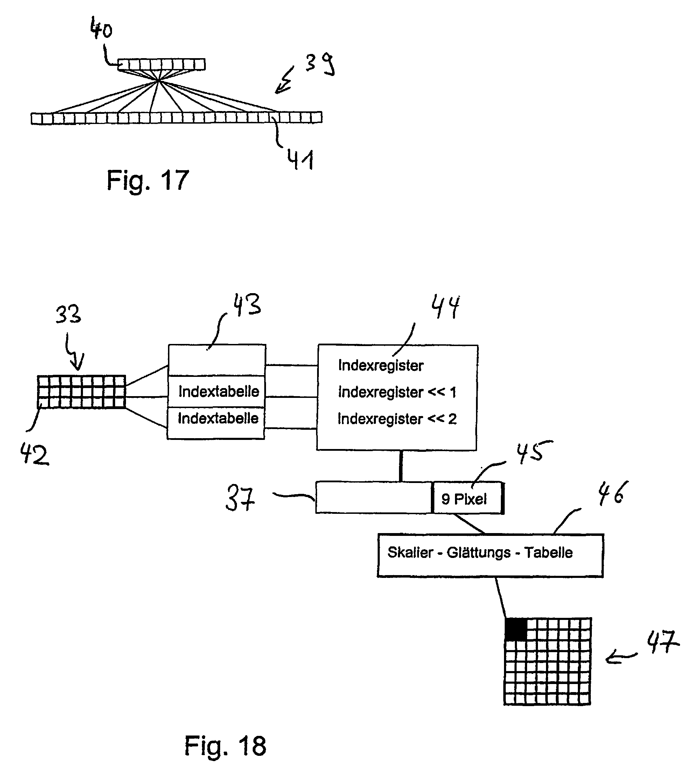

Anhand der Figuren 15 bis 18 wird eine Byte-orientierte Verfahrensweise veranschaulicht, mit der die Quellpixel eindimensional mit Hilfe eines Schieberegisters verarbeitet werden. Dazu werden die Quellpixel gemäß bestimmten Konventionen in das Schieberegister eingetragen, wie in Figur 16 gezeigt. Dies kann direkt in Hardware passieren, indem die einzelnen Zeilen an die entsprechenden Stellen im Register übernommen werden. Bei einer Realisierung in Software wird aus Performancegründen eine Look-Up-Tabelle verwendet. Diese Tabelle ist gemäß Figur 17 aufgebaut. Beim Eintragen in das Register wird die obere Scanline nach Umsetzung direkt in das Register kopiert, die nächste Scanline wird nach Umsetzung um eine Pixelposition nach links verschoben (shift) und dann in das Register eingetragen, die 3. Scanline wird nach Umsetzung um 2 Positionen nach links versetzt in das Register eingetragen (Figur 18).

Im Detail läuft diese Vorgehensweise wie folgt ab: In Figur 15a ist ein Ausschnitt 33, der drei durch die Linien 34 und 34' begrenzte, übereinanderliegende und jeweils acht Pixel breite Streifen 35, 35' und 35" des Quellbildes dargestellt. Links daneben ist jeweils das letzte Pixel der vorigen acht, rechts daneben ist jeweils das erste Pixel der nächsten acht Pixel noch dargestellt. Über diese Struktur wird von links nach rechts ein 3 x 3 Erkennungs-Fenster 36 geschoben. Die Sequenz der Figuren 15a, 15b, 15c und 15d veranschaulicht dies für die ersten vier Schiebevorgänge.

Die Schiebewirkung wird durch bestimmtes Eintragen in das Register 37 und durch Verschieben (shift) um 3 Positionen nach rechts erreicht, wie in Figur 16 mit den Verarbeitungsschritt 45 veranschaulicht. Die acht in einer Bildzeile nebeneinander liegenden Werte(1 byte) werden dabei von rechts nach links jeweils so in das Register 37 eingetragen, daß benachbarte Zeilenwerte im Register um jeweils drei Plätze voneinander beabstandet sind.

Wenn in der Darstellung "Pxy" x und y jeweils den Index in x- bzw. y-Richtung angeben und "Rn" die n-te Position im Register 37, dann werden zum Beispiel die Werte der Pixel P11, P15 und P18 (Bildzeile 36) im Register 37 an den Positionen R1, R13 und R22 abgespeichert. Die jeweils ersten Werte P21 und P31 der nachfolgenden Bildzeilen 34 und 35 liegen dagegen im Register direkt neben dem Wert von P11 an den Positionen R2 und R3. Hierdurch wird erreicht, daß die zweidimensionalen Pixelwerte des Bildes byte-und zeilenweise in das eindimensionale Register eingetragen werden können und daß die Werte im Register spaltenweise zum Auslesen bereit stehen. Es erfolgt also eine Abbildung der zweidimensionalen Werte des Bildes in das eindimensionale Register 37.

Die 3 x 3 = 9 Pixel des Fensters 36' ergeben den Index für die kombinierte Skalier-Glättungs-Tabelle. Dieser Index läßt sich aus dem Register 37 direkt entnehmen als der aus dem Bereich 38 (die 9 rechten, benachbarten Bits des Registers 37) gebildete Wert. Die Bits dieses Werts entsprechen dem Erkennungsfenster und ergeben die geglätteten Zielpixel.

Die entsprechenden Indices für die restlichen sieben Bits einer Bildzeile (35, 35' oder 35'') erhält man anschließend durch jeweiliges Shiften der Registerwerte um 3 Stellen nach rechts. Dieser Shift-Vorgang entspricht dann dem Schieben des Erkennungsfensters 36 in der Sequenz der Figuren 15a bis 15d.

Die Indexdaten können einmal für jeden Block aus 3 Byte Quelldaten in einem Register aufgebaut werden. Das Bestimmen der Indices für die Skalierungs-Glättungsmatrizen einer Bildzeile läßt sich dann noch weiter optimieren. Der Aufbau des Indexregisters aus dem jeweiligen Byte läßt sich dann nämlich in nur einem Schritt über eine Tabelle realisieren, die die in Figur 17 schematisch gezeigten Eigenschaften hat.

Die Linien 39 verbinden jeweils die linke Kante einer Quelle 40 mit der dazu gehörenden Registerposition 41. Für die beiden unteren Bytes der Quelle wird die Umsetztabelle dann einfach um 1 Pixel (das mittlere) oder um 2 Pixel (das untere Byte) nach links geschoben und auf das Indexregister geodert. Diese Umsetztabelle wird im folgenden als Indextabelle bezeichnet.

Die Figur 18 veranschaulicht nochmals den gesamten, auf einer byte-weisen Verarbeitung beruhenden, in Software programmierten Vorgang zum Glätten und Skalieren der Quellbilddaten. Aus je 3 Bytes Eingangsbilddaten 42 im Ausschnitt 33 des Quellbildes wird über die als Look-Up-Tabelle ausgeführte Indextabelle 43 das 30-Bit Register 37 gefüllt (wobei natürlich auch ein 32 Bit-Register verwendet werden kann). Beim Abspeichern des zweiten bzw. dritten Bytes in das Register 37 wird im Verarbeitungsschritt 44 jeweils um eine Position geshiftet (<<1, <<2). Registerplätze, die bereits mit dem vorhergehenden Byte beschrieben worden sind, werden mit den nachfolgenden Daten mit einer "ODER"-Operation überschrieben. Die unteren 9 Bits 45 des Registers 37 ergeben einen Index für die Skalier-Glättungs-Tabelle 46, aus der die skalierten und geglätteten Zielpixel 47 direkt entnommen werden können. Diese werden dann im Zielbereich abgelegt. Danach wird der nächste 3-Byte-Block im Quellbereich bearbeitet. Diese Prozedur wird über das gesamte Quellbild hinweg wiederholt. An den Rändern werden für die nicht vorhanden Randpixel nicht gesetzte Pixel angenommen.

**Verallgemeinerung des byteweisen Bereitstellen der Quellpixel**

Im vorstehenden Beispiel wurde ein quadratisches Glättungs-Fenster mit Qx = Qy = 3 und binäre Pixeldaten zugrunde gelegt. Allgemein ausgedrückt, ist jedoch beim dem Vorgang des Glättens und Skalierens aus einem Rechteck von Quellpixeln ein Quadrat von Zielpixeln zu bestimmen.

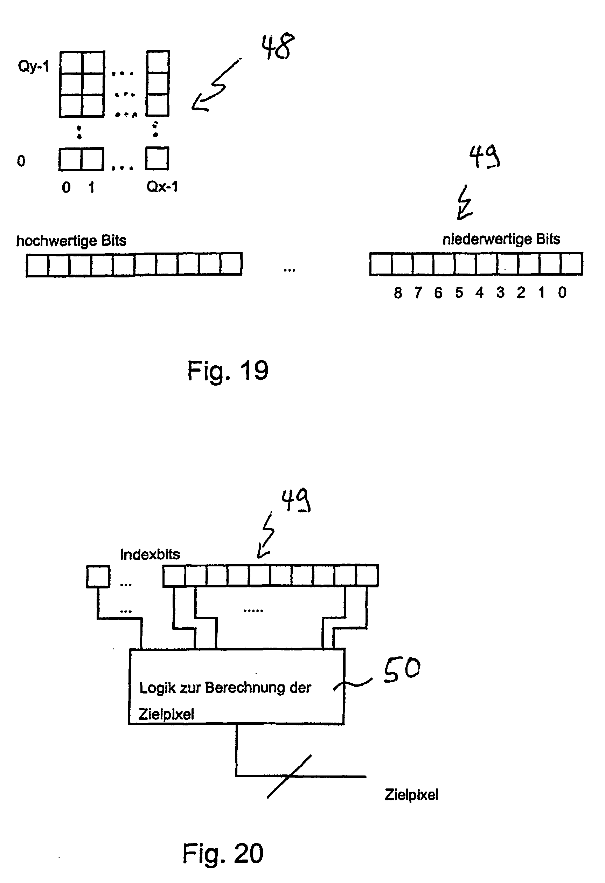

Ausgehend von einem in Figur 19 gezeigten Quellpixel-Rechteck 48 der Breite $Q_x$ in x-Richtung und der Breite $Q_y$ in y-Richtung wird ein Schieberegister der Größe

$$B = Qy \times W \times ( (8n/W) - 1 + Qx )$$

Bit benötigt. Dabei muß 8n/W ganzzahlig sein. Das Schieberegister wird in jedem Schritt mit je n Byte jeder Scanline (Zeile) im Quellpixel-Rechteck nach folgender Gleichung befüllt:

$$R_{(i+A)} = q(i/Q_y, Q_y - 1 - (i\% Q_y)) \qquad \text{(Gleichung 9)},$$

wobei gilt:

Ri:  Wert des i-ten Registerbits
q(k,l):  Wert des Quellpixels mit der Position (k,l)

/: Integer-Division
%: Modulo-Division

$$A = W \times ( Qy \times (Qx - 1))$$

n: Anzahl eingelesener Bytes pro Zeile
W: Wertigkeit eines Pixels, d.h. Bit pro Pixel (binär, Graustufenwert, Farbwert) und
B: Breite des Schieberegisters in Bit

Alternativ zur Regel nach Gleichung 9 kann auch die Regel

$$R_{(i+A)} = q(i/Q_y / i\% Q_y) \qquad \text{(Gleichung 9a)}$$

verwenden werden.

Wenn das Schieberegister nach Gleichung 9 oder 9a vorbelegt wird, dann enthalten die unteren W*Qx*Qy Bits 49 das gewünschte Quellfenster in eindimensionaler Darstellung (im folgenden Indexbits genannt).

Durch Schieben nach rechts um Qy Pixel (W*Qy Bits) erhält man die Indexbits 49 für das nächste Quellfenster. Dieser Vorgang wird 8n/W mal durchgeführt (8n/W muß ganzzahlig sein und es wurde je n Byte pro Quell-Zeile eingelesen), danach erfolgt die Füllung des Registers mit den nächsten Quellbytes.

Figur 20 zeigt eine entsprechende Realisierung in Hardware. Die jeweils erhaltenen Indexbits 49 bilden die Eingangssignale für eine Logik-Schaltung 50 zur Berechnung der Zielpixel.

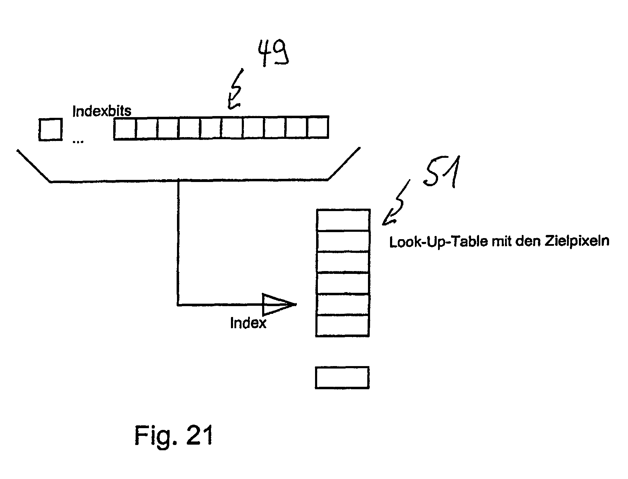

Figur 21 zeigt schematisch eine Umsetzung in Form von Software. Die Indexbits 49 dienen hier als Index zum Adressieren einer Look-Up-Tabelle 51, welche die für diese Kombination bereits im voraus berechneten Zielpixel erhält.

**Verarbeiten von Graustufen- Farbdaten**

Die Bearbeitung von Graustufen- oder Farbpixeln erfolgt nach dem gleichen Prinzip wie mit binären Daten. Alle Kästchen in den gezeichneten Figuren stellen dann ein Pixel dar, das W Bits pro Pixel enthält anstatt einem Bit pro Pixel bei binären Daten. Die Indexbildung sowie die Formeln für die Kombination aus Skalieren und Glätten beziehen sich alle auf Pixel, es ändert sich lediglich die Anzahl der Bits pro Pixel. Die Skalier-Glättungs-Tabelle enthält dann Grau- bzw. Farbwerte anstatt Bits pro Pixel. In Bild 18 bezeichnen die Shiftwerte auf das Indexregister ( <<1, <<2 ) Pixelpositionen, in Bits ausgedrückt sind das ( « 1 x W, « 2 x W ) Bits. Das Verfahren läßt sich also geauso wie für binäre Daten auch für die Verarbeitung von Daten mit W Bits pro Pixel verwenden um Daten eines ersten Rasters in ein zweites umzusetzen, das feiner ist (Hochskalieren).

**Erhöhung der Grau-/Farbstufen**

Bisher wurden Anwendungsfälle beschrieben, die Daten einer ersten Auflösung in Daten einer zweiten Auflösung umsetzen, wobei die zweite Auflösung feiner ist als die erste und die Anzahl der Grau-/Farbstufen gleich blieb. Das beschriebene Verfahren läßt sich aber auch für eine Erhöhung der Grau-/Farbstufen (im folgenden nur noch als Graustufen bezeichnet) benutzen. Ausgegangen wird von einem Skalierfaktor S, die Quelldaten liegen mit Wq Bits pro Pixel vor, die Zieldaten sollen mit Wz Bits pro Pixel erstellt werden.

Insgesamt werden am Ende

$S^2$ Zielpixel mit $2^{Wz} - 1$ Variationsmöglichkeiten benötigt. Nach dem bisherigen Verfahren würde man $S^2$ Zielpixel mit $2^{Wq} - 1$ Variationmöglichkeiten erhalten. Wir erreichen die erweiterten Variationsmöglichkeiten, indem mit einem neuen, größeren Skalierfaktor Sr skaliert wird. Dieser ist üblicherweise (der Einfachheit halber) ganzzahlig. Dazu ist folgende Ungleichung zu lösen

$$Sr^2 * \left(2^{Wq} - 1\right) \geq S^2 * \left(2^{Wz} - 1\right)$$

**EP 1 034 511 B1**

$$Sr^2 \geq S^2 * \frac{2^{Wz} - 1}{2^{Wq} - 1}$$

$$Sr \geq S * \sqrt{\frac{2^{Wz} - 1}{2^{Wq} - 1}}$$

Die zusätzlichen Pixel im Zielbereich, die sich durch den höheren Skalierfaktor ergeben, werden dann in die benötigten Graustufen umgewandelt.

Wq     Bits pro Pixel der Quelldaten
Wz     Bits pro Pixel der Zieldaten
S     Skalierfaktor
Sr     resultierender Summenskalierfaktor.

Dies soll beispielhaft an einer Umsetzung von binären 300 dpi-Daten in 300 dpi-Daten mit 2 Bit pro Pixel dargestellt werden. Hier werden nur die Graustufen, nicht die Auflösung erhöht. Es gilt:

$$Wq = 1$$

$$Wz = 2$$

$$S = 1$$

$$Sr \geq 1 * \sqrt{\frac{2^2 - 1}{2^1 - 1}} = \sqrt{\frac{4 - 1}{2 - 1}} = \sqrt{\frac{3}{1}} = \sqrt{3}$$

Gewählt wird beispielhaft:

$$Sr = 2$$

Skalierfaktor 2, wir erhalten 4 Zielpixel für ein Quellpixel. Die vier gewonnenen Pixel haben Werte zwischen b0000 und b1111, wobei das vorangestellte b binäre Schreibweise bedeutet. Diese Pixel werden nun in Graustufen umgewandelt, wobei die Anzahl schwarze Pixel (z.B mit Pixelwert 1) aufsummiert und in einen Grauwert umgesetzt werden. Die Umsetzung muß nicht linear erfolgen, sie kann sich nach der (Nicht)Linearität der Ausgabeeinheit richten. Die Umsetzung erfolgt mittels einer Tabelle, z.B.

| Pixelwert | Grauwert |
|---|---|
| Kein schwarzes | Pixel |
| b0000 | b00 |
| Ein schwarzes | Pixel |
| b0001 | b01 |
| b0010 | b01 |
| b0100 | b01 |
| b1000 | b01 |

**17**

(fortgesetzt)

| Pixelwert | Grauwert |
|---|---|
| Zwei schwarze | Pixel |
| b0011 | b10 |
| b0101 | b10 |
| b1001 | b10 |
| b0110 | b10 |
| b1010 | b10 |
| b1100 | b10 |
| | |
| Drei schwarze | Pixel |
| b0111 | b11 |
| b1011 | b11 |
| b1101 | b11 |
| b1110 | b11 |
| | |
| Vier schwarze | Pixel |
| b1111 | b11 |

Die Skalier-Glättungstabelle 46 in Figur 16 hat dann bei einer Größe des Glättungsfensters von G = 5 im Zielbereich, Qx = Qy = 3 im Quellbereich 512 Einträge mit je einem Pixel, das aus 2 Bit besteht. Da die Umwandlung in Graustufen schon in die Skalier-Glättungstabelle eingearbeitet ist, bewirkt sie keinen Performaceverlust.

**Nutzung der Variabilität bezüglich der verwendeten Skalier-und Glättungsalgorithmen**

Es können verschiedene Kombinationen aus Skalierung und Glättung durch einfachen Austausch des Inhalts der Skalier-Glättungstabelle realisiert werden, ohne die restliche Vorrichtung, egal ob in Hardware oder Software ausgeführt, beeinflussen zu müssen. Dies ermöglicht das Vorgeben von bestimmten Skalier- und Glättungsverfahren z. B. in Druckdaten, bei denen nicht im Vorraus feststeht in welcher Auflösung sie ausgedruckt werden sollen. Die Vorgabe der Verfahren für ein bestimmtes Quellimage kann erfolgen indem den Quelldaten über zwei zusätzliche Parameter die optimalen Verfahren z.B. aus einem Satz von durchnumerierten Standardverfahren ausgewählt werden können. Alternativ könnten die Gleichungen der Verfahren in kodierter Form übergeben werden. Die Form der Kodierung ist dabei frei wählbar. Sollen z.B. in einem Drucksystem Eingangsdaten mit verschiedenen Auflösungen verarbeitet werden (unterschiedliche Skalierfaktoren), ist dafür je eine eigene Vorrichtung nötig.

**Verallgemeinerung der "Glättung"**

Besonders bei der Verarbeitung von Farbdaten existieren Algorithmen für Filterungen, die genauso wie Glättungsalgorithmen ein Fenster (Quadrat) mit ungerader Kantenlänge G über die Zielpixel schieben und aus den Umgebungspixeln das Zentralpixel neu bestimmen. Ist dieser Vorgang mit einer Skalierung verbunden, so läßt er sich nach dem hier beschriebenen Verfahren genauso im Quellbereich durchführen, die Skalier-Glättungstabelle würde dann z.B. eine Skalier-Filterungstabelle darstellen.
Die Erfindung wurde insbesondere zur Verwendung in einem Drucker beschrieben, der die Bilddaten von einem ersten Raster in ein zweites Raster umsetzt, unter Beibehaltung oder Erhöhung der Graustufen bzw. Farbwerte. Auch eine alleinige Erhöhung von Graustufen/Farbstufen im gleichen Raster ist möglich. Dabei ist klar, daß die Bilddaten auch innerhalb eines Computers so aufbereitet werden können, daß sie in einer an den Drucker angepaßten Auflösung zur Verfügung stehen. Insbesondere in einem Netzwerk, bei dem Druckaufträge von verschiedenen Computern an einen zentralen Drucker gesendet werden, wird dies regelmäßig der Fall sein. Dabei kann die Umsetzung sowohl im sendenden Computer als auch in einem zwischengeschalteten Computer erfolgen, der die Druckaufträge verwaltet.

Bezugszeichenliste

| | |
|---|---|
| 1 | Quellbild |
| 1-1, 1-2, 1-3, 1-4 | Quellpixel |
| 2-1, 2-2, 2-3, 2-4 | Quellpixel |
| 3-1, 3-2, 3-3, 3-4 | Quellpixel |
| 4-1, 4-2, 4-3, 4-4 | Quellpixel |
| 2 | Skaliervorgang |
| 3 | Zwischenbild |
| 4 | Glättvorgang |
| 5 | Zielbild |
| 6 | Koordinatensystem für Quell-bzw. Zielraster |
| 7 | Pixel im Quellbereich |
| 7' | Quellblock |
| 8 | Pixel im Zielbereich |
| 8' | Zielblock |
| 9 | Quellquadrate |
| 10 | Zielquadrate |
| 11 | weißes Eckpixel |
| 12 | schwarzes Eckpixel |
| 13 | Randpixel |
| 14 | Bildausschnitt |
| 15 | Quellbildbereich |
| 16 | Zwischenbildbereich |
| 17 | Filterfenster |
| 18 | erster Zielpixel |
| 19 | zweiter Zielpixel |
| 20 | dritter Zielpixel |
| 21 | vierter Zielpixel |
| 22 | Zielpixelgruppe |
| 23 | Quellpixel-Quadrat |
| 23', 23" | Rasterlinie |
| 24 | Zielpixel-Quadrat |
| 24', | 24" Rasterlinie |
| 25 | Gruppe von Quellpixeln |
| 26 | Erstes 3 x 3-Quellpixel-Quadrat |
| 27 | Zweites 3 x 3-Quellpixel-Quadrat |
| 28 | Drittes 3 x 3-Quellpixel-Quadrat |
| 29 | Viertes 3 x 3-Quellpixel-Quadrat |
| 30 | 5 x 5-Zielpixel-Quadrat |
| 31, 31', 31", 31''' | Erste Fluchtende Linien |
| 32, 32', 32", 32"" | Zweite Fluchtende Linien |
| 33 | Bildausschnitt |
| 34, 34' | Grenze des Bildausschnitts |
| 35, 35', 35" | Bildstreifen |
| 36, 36' | Erkennungs-Fenster |
| 37 | Schieberegister |
| 38 | Schieberegister-Bereich |
| 39 | Zuordnungslinien |
| 40 | Bildquelle |
| 41 | Registerposition |
| 42 | Quellbilddaten |
| 43 | Indextabelle |
| 44 | Verarbeitungsschritt zum Shiften |
| 45 | ausgelesene 9 Pixel |
| 46 | Skalier-Glättungs-Tabelle |

| 47 | Zielbilddaten |
|----|----|
| 48 | Quellpixel-Rechteck |
| 49 | Indexbits |
| 50 | Logikschaltung |
| 51 | Look-Up-Tabelle |
| 52a..52d | Quellpixel-Fenster |
| 53 | Zielpixel-Quadrat |
| 54 | Zielpixel-Rechteck |
| 55 | Zielpixel-Rechteck |
| 56 | Zielpixel-Quadrat |

**Patentansprüche**

1. Verfahren zur Umsetzung digitaler, auf Quellpixel bezogener Quelldaten im Raster einer ersten Auflösung in digitale Zieldaten im Raster einer zweiten Auflösung durch Skalierung um mindestens einen Skalierfaktor ($s_x$) nach einer Skalierungsregel ($s_x$, $s_y$) und Glättung nach einer Glättungsregel, wobei

    (a) jedes Quelldatum zum Glätten aller benachbarten Quelldaten verwendet wird,

    (b) jedem Quelldatum (1, 7, 7', 23, 33, 42) einzelpixelweise anhand eines das Quellpixel umgebenden Umgebungsfensters (52a, 52b, 52c, 52d) eine Zielbild-Matrix (26, 27, 28, 29, 53, 54, 55, 56) zugeordnet wird und

    (c) aus benachbarten Zielbild-Matrizen (26, 27, 28, 29, 53, 54, 55, 56) die Zieldaten derart bestimmt werden, dass die Zieldaten im Raster der Quelldaten geglättet werden und die Skalierung und die Glättung in einem einzigen und gemeinsamen Schritt erfolgen.

2. Verfahren nach Anspruch 1, wobei benachbarte Zielbild-Matrizen (26, 27, 28, 29, 53, 54, 55, 56) zur Bestimmung der Zieldaten einander überlagert oder ohne überlapp zusammengefügt werden.

3. Verfahren zur Umsetzung digitaler Quelldaten im Raster einer ersten Auflösung in digitale Zieldaten im Raster einer zweiten Auflösung durch Skalierung um mindestens einen Skalierfaktor ($s_x$) nach einer Skalierungsregel ($s_x$, $s_y$) und Glättung nach einer Glättungsregel in einem einzigen Verarbeitungsschritt, wobei

    (a) eine Skalierungsregel zur Skalierung der Daten um mindestens einen Skalierfaktor ($s_x$) aus mehreren auswählbaren Skalierunsregeln ($s_x$, $s_y$) vorgegeben wird,

    (b) eine Glättungsregel zur Glättung der Quelldaten aus mehreren auswählbaren Glättungsregeln vorgegeben wird,

    (c) die beiden vorgegebenen Regeln zu einer einzigen Skalierungs- und Glättungsregel derart zusammengeführt werden, dass

        (c1) jedes Quelldatum zum Glätten aller benachbarten Quelldaten verwendet wird,

        (c2) jedem Quelldatum (1, 7, 7', 23, 33, 42) einzelpixelweise anhand eines das Quellpixel umgebenden Umgebungsfensters (52a, 52b, 52c, 52d) eine Zielbild-Matrix (26, 27, 28, 29, 53, 54, 55, 56) zugeordnet wird und

        (c3) aus benachbarten Zielbild-Matrizen (26, 27, 28, 29, 53, 54, 55, 56) die Zieldaten derart bestimmt werden, dass die Zieldaten im Raster der Quelldaten geglättet werden und die Skalierung und die Glättung in einem einzigen und gemeinsamen Schritt erfolgen.

4. Verfahren nach Anspruch 3, wobei die Vorgabe der Skalierungsregel und/oder der Glättungsregel durch einen Druckauftrag erfolgt.

5. Verfahren nach Anspruch 4, wobei innerhalb des Druckauftrages bereichsweise verschiedene Glättungsregeln verwendet werden.

**6.** Verfahren nach einem der Ansprüche 1 bis 5, wobei der Skalierfaktor ($s_x$, $s_y$) einen gebrochenen Wert hat

**7.** Verfahren nach einem der vorhergehenden Ansprüche, wobei das Skalieren und Glätten erfolgt, indem einzelpixelweise aus den Quelldaten (1, 7, 7', 23, 42) je ein der Zielbild-Matrix (26, 27, 28, 29, 53, 54, 55, 56) zugeordneter Index (49) erzeugt wird, mit dem die Zieldaten (8, 10, 24, 30, 47) ermittelt werden.

**8.** Verfahren nach Anspruch 7, **dadurch gekennzeichnet, daß** der Index (49) verwendet wird zur Adressierung einer Look-Up-Tabelle (51), welche die Zieldaten enthält.

**9.** Verfahren nach Anspruch 8, wobei der Index (49) in Form eines Indexsignals zur Ansteuerung einer elektronischen Schaltung (51) verwendet wird, die aus den Indexsignalen die Zieldaten (8, 10, 24, 30, 47) bildet.

**10.** Verfahren nach einem der Ansprüche 7 bis 9, wobei die Quelldaten (33) Byte-weise in ein Schieberegister (37) gespeichert werden, wobei jeweils eine zusammengehörige Gruppe von Daten (36, 36') im Schieberegister (37) mit jedem Verarbeitungstakt geshiftet werden, wodurch nach dem Shiften aller Daten der Gruppe der Index (49) aus nebeneinanderliegenden Bits des Schieberegisters (37) gebildet wird.

**11.** Verfahren nach einem der vorhergehenden Ansprüche, wobei das Schieberegister mit jedem Verarbeitungstakt nach folgenden Regeln befüllt wird:

(a) $R_0$ bis $R_{(A-1)}$ bleiben unberührt und
(b)

$$R_{(i+A)} = q(i/Q_y, Q_y - 1 - (i\%Q_y))$$

oder

$$R_{(i+A)} = q(i/Q_y, i\%Q_y),$$

wobei gilt:

| | |
|---|---|
| $R_i$: | Wert des i-ten Registerbits |
| $Q_x$: | Fensterbreite in x-Richtung |
| $Q_y$: | Fensterbreite in x-Richtung |
| q(k,l): | Wert des Quellpixels mit der Position (k,l) |
| /: | Integer-Division |
| S: | Modulo-Division und |

$$A = Q_y * (Q_x - 1).$$

**12.** Verfahren nach einem der vorhergehenden Ansprüche, wobei als Quelldaten (1, 7, 7', 23, 33, 42) zu Bildern gehörende Pixeldaten verarbeitet werden.

**13.** Verfahren nach einem der vorhergehenden Ansprüche, wobei jeweils Ausschnitte des Bildes mit 1 x m Quellpixeln als Fenster derart gemeinsam verarbeitet werden, dass aus jedem Quellpixel-Fenster Zielbild-Matrizen mit je n x p Zielpixeln gebildet werden und dass die Zielpixel benachbarter Zielbild-Matrizen in einem Speicher nebeneinander abgelegt oder überlappt werden.

**14.** Verfahren nach Anspruch 13, wobei benachbarte Zielbild-Matrizen mit einer "ODER"-Operation überlappt werden.

**15.** Verfahren nach Anspruch 14, wobei für Skalierfaktoren $SF_x = SF_y = 2,5$ die Quellpixel-Fenster je 3 x 3 Pixel umfassen, wobei aus jedem Quellpixel-Fenster genau eine Zielbild-Matrix mit 3 x 3 Zielpixeln gebildet wird und wobei aus je vier Zielbild-Matrizen durch eine "ODER"-Operation genau 5 x 5 Zielpixel gebildet werden.

**16.** Verfahren nach einem der vorhergehenden Ansprüche, wobei jedem Quellpixel ein Grauwert zugeordnet ist.

**17.** Verfahren nach Anspruch 16, wobei eine Skalierung und/oder Glättung im Grauwert-Raster erfolgt.

**18.** Verfahren nach einem der vorhergehenden Ansprüche, wobei jedem Quellpixel ein Farbwert zugeordnet ist.

**19.** Verfahren nach Anspruch 18, wobei eine Skalierung und/oder Glättung im Farbwert-Raster erfolgt.

**Claims**

**1.** Method for converting digital source data referring to source pixels in the raster of a first resolution into digital target data in the raster of a second resolution by scaling by at least one scaling factor ($s_x$) according to a scaling rule ($s_x$, $s_y$) and smoothing according to a smoothing rule, wherein

(a) each source datum is used for smoothing all neighbouring source data,

(b) individual pixel by individual pixel, a target image matrix (26, 27, 28, 29, 53, 54, 55, 56) is allocated to each source datum (1, 7, 7', 23, 33, 42) on the basis of a surrounding window (52a, 52b, 52c, 52d) surrounding the source pixel, and

(c) the target data are determined such from neighbouring target image matrices (26, 27, 28, 29, 53, 54, 55, 56) that the target data are smoothed in the raster of the source data and the scaling and the smoothing ensue in one single and common step.

**2.** Method according to claim 1, wherein neighbouring target image matrices (26, 27, 28, 29, 53, 54, 55, 56) are superimposed on one another for determining the target data or are joined without overlap.

**3.** Method for converting digital source data in the raster of a first resolution into digital target data in the raster of a second resolution by scaling by at least one scaling factor ($s_x$) according to a scaling rule ($s_x$, $s_y$) and smoothing according to a smoothing rule in one single processing step, wherein

(a) a scaling rule for scaling the data by at least one scaling factor ($s_x$) is predetermined from a plurality of selectable scaling rules ($S_x$, $s_y$),

(b) a smoothing rule for smoothing the source data is predetermined from a plurality of selectable smoothing rules,

(c) the two predetermined rules are combined to a single scaling and smoothing rule such that

(c1) each source datum is used for smoothing all neighbouring source data,

(c2) each source datum (1, 7, 7', 23, 33, 42) has a target image matrix (26, 27, 28, 29, 53, 54, 55, 56) allocated to it individual pixel by individual pixel on the basis of a surrounding window (52a, 52b, 52c, 52d) surrounding the source pixel, and

(c3) the target data are determined from neighbouring target image matrices (26, 27, 28, 29, 53, 54, 55, 56) such that the target data are smoothed in the raster of the source data and the scaling and the smoothing take place in one single and common step.

**4.** Method according to claim 3, wherein the scaling rule and/or the smoothing rule is predetermined by a print job.

**5.** Method according to claim 4, wherein different smoothing rules are employed region-wise within the print job.

**6.** Method according to one of the claims 1 to 5, wherein the scaling factor ($S_x$, $S_y$) has a fractional value.

**7.** Method according to one of the preceding claims, wherein the scaling and smoothing ensue in that a respective index (49) which is allocated to the target image matrix (26, 27, 28, 29, 53, 54, 55, 56) is generated individual pixel by individual pixel from the source data (1, 7, 7', 23, 42), with which index the target data (8, 10, 24, 30, 47) are determined.

8. Method according to claim 7, **characterized in that** the index (49) is used for addressing a look-up table (51) which contains the target data.

9. Method according to claim 8, wherein the index (49) is employed in the form of an index signal for driving an electronic circuit (51) that forms the target data (8, 10, 24, 30, 47) from the index signals.

10. Method according to one of the claims 7 to 9, wherein the source data (33) are stored byte-by-byte in a shift register (37), wherein an interrelated group of data (36, 36') are respectively shifted in the shift register (37) with each processing clock cycle, as a result whereof the index (49) is formed from bits of the shift register (37) lying next to one another after the shifting of all data of the group.

11. Method according to one of the preceding claims, wherein the shift register is filled according to the following rules every processing clock cycle:

    (a) $R_0$ to $R_{(A-1)}$ remain unaffected and
    (b)

$$R_{(i+A)} = q(i/Q_y, Q_y -1-(i\%Q_y))$$

    or

$$R_{(i+A)} = q(i/Q_y, i\%Q_y),$$

    wherein:

| | |
|---|---|
| $R_i$: | value of the $i^{th}$ register bit |
| $Q_x$: | window width in x-direction |
| $Q_y$: | window width in y-direction |
| $q(k,l)$: | value of the source pixel having the position (k,l) |
| /: | integer division |
| %: | modulo division and |

$$A = Q_y * (Q_x - 1).$$

12. Method according to one of the preceding claims, wherein pixel data belonging to images are processed as the source data (1, 7, 7', 23, 33, 42).

13. Method according to one of the preceding claims, wherein segments of the image having 1 x m source pixels are respectively processed in common as a window such that target image matrices each respectively having n x p target pixels are formed from each source pixel window, and that the target pixels of neighbouring target image matrices are deposited in a memory next to one another or overlapped.

14. Method according to claim 13, wherein neighbouring target image matrices are overlapped with an OR operation.

15. Method according to claim 14, wherein the source pixel windows each comprise 3 x 3 pixels for scaling factors SFx = SFy = 2.5, wherein from each source pixel window exactly one target image matrix having 3 x 3 target pixels is formed and wherein exactly 5 x 5 target pixels are formed from respectively four target image matrices by an OR operation.

16. Method according to one of the preceding claims, wherein a greyscale value is allocated to each source pixel.

17. Method according to claim 16, wherein a scaling and/or smoothing ensues in the greyscale value raster.

18. Method according to one of the preceding claims, wherein a colour value is allocated to each source pixel.

**19.** Method according to claim 18, wherein a scaling and/or smoothing ensues in the colour value raster.

**Revendications**

**1.** Procédé de conversion de données sources numériques, relatives à des pixels sources, en trame d'une première résolution, en données cibles numériques en trame d'un seconde résolution, en effectuant un cadrage d'au moins un facteur de cadrage ($s_x$) conformément à une règle de cadrage ($s_x$, $s_y$) et en lissant conformant à une règle de lissage, dans lequel :

(a) chaque donnée source est utilisée pour lisser toutes les données sources voisines,
(b) une matrice d'image cible (26, 27, 28, 29, 53, 54, 55, 56) est associée, pour chaque pixel individuel, à chaque donnée source (1, 7, 7', 23, 33, 42) par référence à une fenêtre d'enveloppe (52a, 52b, 52c, 52d) enveloppant le pixel source, et
(c) les données cibles sont déterminées à partir de matrices d'image cible voisines (26, 27, 28, 29, 53, 54, 55, 56) de façon à lisser les données cibles en trame de données sources et à effectuer le cadrage et le lissage en une seule étape commune.

**2.** Procédé selon la revendication 1, dans lequel des matrices d'image cible voisines (26, 27, 28, 29, 53, 54, 55, 56) sont assemblées à recouvrement ou sans recouvrement en vue de déterminer les données cibles.

**3.** Procédé de conversion de données sources numériques en trame d'une première résolution, en données cibles numériques en trame d'une seconde résolution, en effectuant un cadrage d'au moins un facteur de cadrage ($s_x$) conformément à une règle de cadrage ($s_x$, $s_y$) et en lissant conformant à une règle de lissage en une seule étape opératoire, consistant à

(a) prédéterminer une règle de cadrage pour cadrer les données d'au moins un facteur de cadrage ($s_x$) à partir de plusieurs règes de cadrage sélectionnables ($s_x$, $s_y$),
(b) prédéterminer une règle de lissage pour lisser les données sources à partir de plusieurs règles de lissage sélectionnables,
(c) combiner les deux règles prédéterminées pour donner une seule règle de cadrage et de lissage de telle sorte que

(c1) chaque donnée source est utilisée pour lisser toutes les données voisines,
(c2) une matrice d'image cible (26, 27, 28, 29, 53, 54, 55, 56) est associée pour chaque pixel individuel à chaque donnée source (1, 7, 7', 23, 33, 42) par référence à une fenêtre d'enveloppe (52a, 52b, 52c, 52d) enveloppant le pixel source, et
(c3) les données cibles sont déterminées à partir de matrices d'image cible voisines (26, 27, 28, 29, 53, 54, 55, 56) de façon à lisser les données cibles en trame de données sources, et à effectuer le cadrage et le lissage en une seule étape commune.

**4.** Procédé selon la revendication 3, dans lequel la prédétermination de la règle de cadrage et/ou de la règle de lissage est effectuée par une tâche d'impression.

**5.** Procédé selon la revendication 4, dans lequel différentes règles de lissage sont utilisées par zones pendant de la tâche d'impression.

**6.** Procédé selon l'une des revendications 1 à 5, dans lequel le facteur de cadrage ($s_x$, $s_y$) a une valeur fractionnaire.

**7.** Procédé selon l'une des revendications précédentes, dans lequel le cadrage et le lissage sont effectués en générant pour chaque pixel individuel, à partir des données sources (1, 7, 7', 23, 42), un index associé à la matrice d'image cible (26, 27, 28, 29, 53, 54, 55, 56) permettant de déterminer les données cibles (8, 10, 24, 30, 47).

**8.** Procédé selon la revendication 7, **caractérisé en ce que** l'index (49) est utilisé pour adresser une table de consultation (51) qui contient les données cibles.

**9.** Procédé selon la revendication 8, dans lequel l'index (49) est utilisé sous la forme d'un signal d'index pour commander un circuit électronique (51) qui forme les données cibles (8, 10, 24, 30, 47) à partir de signaux d'index.

**10.** Procédé selon l'une des revendications 7 à 9, dans lequel les données sources (33) sont mémorisées sous forme d'octets dans un registre à décalage (37), un groupe homogène de données (36, 36') étant à chaque fois décalé dans le registre à décalage (37) à chaque fréquence de traitement, d'où il résulte qu'après le décalage de toutes les données du groupe, l'index (49) est formé à partir de binaires adjacents du registre à décalage (37).

**11.** Procédé selon l'une des revendications précédentes, dans lequel le registre à décalage se conforme à chaque fréquence de travail aux règles suivantes :

(a) $R_0$ à $R_{(A-1)}$ restent intacts, et
(b)

$$R_{(i+A)} = q(i/Q_y, Q_y-1-(i\%Q_y))$$

ou

$$R_{(i+A)} = q(i/Q_y, (i\%Q_y))$$

où

$R_i$ :      valeur des i-ème binaires de registre
$Q_x$ :      largeur de la fenêtre dans la direction x
$Q_y$ :      largeur de la fenêtre dans la direction y
$q(k, l)$ :   valeur du pixel source avec la position (k, l)
$/$ :        division entière
$\%$ :        division modulo, et

$$A = Q_y * Q_x - 1)$$

**12.** Procédé selon l'une des revendications précédentes, dans lequel des données de pixel associées à des images sont traitées comme données sources (1, 7, 7', 23, 33, 42).

**13.** Procédé selon l'une des revendications précédentes, dans lequel des portions de l'image comportant 1 x m pixels sources sont traitées en commun en tant que fenêtres de manière à former des matrices d'image cible de n x p pixels cibles chacune à partir de chaque fenêtre de pixels sources, et de manière à placer les pixels cibles de matrices d'image cible voisines dans une mémoire de façon adjacente ou à recouvrement.

**14.** Procédé selon la revendication 13, dans lequel des matrices d'images cible voisines sont disposées à recouvrement par une opération « OU ».

**15.** Procédé selon la revendication 14, dans lequel les fenêtres de pixels sources comportent, pour des facteurs de cadrage $SF_x = SF_y = 2,5$, chacune 3 x 3 pixels, une matrice d'image cible de 3 x 3 pixels cibles étant précisément formée à partir de chaque fenêtre de pixels sources, et de 5 x 5 pixels cibles étant formée à partir d'une matrice d'image cible sur quatre par une opération « OU ».

**16.** Procédé selon l'une des revendications précédentes, dans lequel une valeur de gris est associée à chaque pixel source.

**17.** Procédé selon la revendication 16, dans lequel un cadrage et/ou un lissage est effectué dans la trame de valeurs de gris.

**18.** Procédé selon l'une des revendications précédentes, dans lequel une valeur de couleur est associée à chaque pixel source.

**19.** Procédé selon la revendication 18, dans lequel un cadrage et/ou un lissage est effectué dans la trame de valeurs de couleur.

Fig. 1

Fig. 2a

Fig. 2b

Fig. 2c

Stand der Technik

Stand der Technik

Fig. 2d

Stand der Technik

Fig. 3

Fig. 4

Fig. 5

Fig. 6a  Fig. 6b  Fig. 6c

Fig. 7

15

16

Skalieren um Faktor 2

Fig. 8

17  16  19  20  21  22

18

Fig. 9a    Fig. 9b    Fig. 9c    Fig. 9d    Fig. 9e

23'  23''  23    24'  24''  24

RW1    RW2

Fig. 10

25  23    25

23    23

25    23

25    Fig. 11

Fig. 12

Fig. 13

Fig. 14

Fig. 15a    Fig. 15b    Fig. 15c    Fig. 15d

Fig. 16

Fig. 17

Indexregister
Indexregister << 1
Indexregister << 2

Indextabelle
Indextabelle

9 Pixel

Skalier - Glättungs - Tabelle

Fig. 18

Qy-1

0

0　1　　Qx-1

48

49

hochwertige Bits

...

niederwertige Bits

8 7 6 5 4 3 2 1 0

## Fig. 19

49

Indexbits

...

...

.....

Logik zur Berechnung der
Zielpixel

50

Zielpixel

## Fig. 20

49

Indexbits

51

Look-Up-Table mit den Zielpixeln

Index

## Fig. 21

Fig. 22

Fig. 23